(19) **Europäisches Patentamt**
**European Patent Office**
**Office européen des brevets**

(11) **EP 4 541 194 A1**

(12) **EUROPÄISCHE PATENTANMELDUNG**

(43) Veröffentlichungstag:
**23.04.2025 Patentblatt 2025/17**

(21) Anmeldenummer: **24206018.4**

(22) Anmeldetag: **11.10.2024**

(51) Internationale Patentklassifikation (IPC):
*A21C 5/00* (2006.01)    *A21C 1/00* (2006.01)
*A21C 7/00* (2006.01)    *A21C 9/00* (2006.01)
*A21C 9/08* (2006.01)    *A21C 11/00* (2006.01)
*A21C 14/00* (2006.01)

(52) Gemeinsame Patentklassifikation (CPC):
**A21C 14/00; A21C 1/00; A21C 5/00; A21C 7/00;**
**A21C 9/00; A21C 9/08; A21C 11/00**

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **19.10.2023 DE 102023210309**

(71) Anmelder: **WP Kemper GmbH**
**33397 Rietberg (DE)**

(72) Erfinder:
• **Oestersötebier, Felix**
**33332 Gütersloh (DE)**
• **Just, Viktor**
**32657 Lemgo (DE)**

(74) Vertreter: **Rau, Schneck & Hübner**
**Patentanwälte Rechtsanwälte PartGmbB**
**Königstraße 2**
**90402 Nürnberg (DE)**

(54) **VERFAHREN ZUM ANALYSIEREN EINES BETRIEBS EINER TEIGBEARBEITUNGSANLAGE SOWIE TEIGBEARBEITUNGSANLAGE**

(57)    Zum Analysieren eines Betriebs einer Teigbearbeitungsanlage wird mindestens ein Markierungsparameter für einen Teig-Anteil eines während Betriebsschritten der Anlage zu bearbeitenden Teigs vorgegeben. Der Teig-Anteil wird mit dem Markierungsparameter markiert (58). Der markierte Teig-Anteil wird während der Betriebsschritte verfolgt (59) und Betriebsdaten werden während des Bearbeitens des markierten Teig-Anteils im Rahmen der Betriebsschritte erfasst (60). Die erfassten Betriebsdaten werden dem markierten Teig-Anteil zugeordnet (61) und, zugeordnet zum markierten Teig-Anteil, mittels einer Betriebsdaten-Anzeige dargestellt (63). Es resultiert ein Verfahren zur Verbesserung einer Betriebseffizienz der Teigbearbeitung.

Fig. 5

**Beschreibung**

Der Inhalt der deutschen Patentanmeldung DE 10 2023 210 309.5 wird durch Bezugnahme hierin aufgenommen.

Die Erfindung betrifft ein Verfahren zum Analysieren eines Betriebs einer Teigbearbeitungsanlage. Ferner betrifft die Erfindung eine Teigbearbeitungsanlage zur Durchführung eines derartigen Analyseverfahrens.

Eine Teigbearbeitungsanlage ist bekannt aus der WO 2022/103 611 A1 und der EP 1 173 720 B1. Komponenten für eine derartige Teigbearbeitungsanlage sind bekannt aus der WO 2015/043 107 A1 und aus der EP 3 613 290 A1.

Es ist eine Aufgabe der vorliegenden Erfindung, ein Teigbearbeitungsverfahren und eine Teigbearbeitungsanlage hierfür derart weiterzubilden, dass eine Betriebseffizienz bzw. Ressourceneffizienz des Teigbearbeitungsverfahrens sowie der Teigbearbeitungsanlage verbessert ist.

Diese Aufgabe ist erfindungsgemäß gelöst durch ein Analyseverfahren zum Betrieb einer Teigbearbeitungsanlage mit den in Anspruch 1 angegebenen Merkmalen und durch eine Teigbearbeitungsanlage mit den in Anspruch 8 angegebenen Merkmalen.

Erfindungsgemäß wurde erkannt, dass eine einen jeweiligen Teig-Anteil zugeordnete Betriebsdatenerfassung im Rahmen eines Teigbearbeitungsverfahrens die Möglichkeit schafft, auf Grundlage derartiger Betriebsdaten eine eingehende Untersuchung des Einflusses der verschiedenen Betriebsdaten auf das Ergebnis des Teigbearbeitungsverfahrens durchzuführen. Die erfassten und dargestellten Betriebsdaten können als Basis für eine KI-basierte, übergreifende Prozessregelung dienen. Die Betriebsdaten können für den jeweiligen, markierten Teig-Anteil entlang des Betriebsverfahrens zusammengeführt und einen einzelnen Teigling zusätzlich oder einer Gruppe von Teiglingen zugeordnet werden.

Das Markieren des Teig-Anteils mit dem vorgegebenen Markierungsparameter kann durch Zuordnen des Markierungsparameters zu einem diesen Teig-Anteil betreffenden digitalen Datensatz erfolgen.

Bei den erfassten Betriebsdaten kann es sich um Daten einer jeweiligen Bearbeitungsstation beziehungsweise Daten einer Einrichtung der Teigbearbeitungsanlage handeln, also um Ist- und/oder Soll-Werte entsprechend den Stations-Betriebsparametern. Alternativ oder zusätzlich kann es sich bei den Betriebsdaten um Daten des Teig-Anteils oder des Teiglings handeln, beispielsweise um Daten zum Gewicht, zur Dichte, zur Temperatur oder zur Feuchtigkeit. Weitere Betriebsdaten können sich beispielsweise aufgrund einer im Rahmen der Bearbeitung erfolgenden Veredelung der Teiglinge ergeben. Alternativ oder zusätzlich kann es sich um Umgebungs-Betriebsdaten handeln, beispielsweise um Daten zur Umgebungstemperatur, zum Umgebungs-Luftdruck und/oder zur Umgebungs-Luftfeuchtigkeit. Bei der Umgebung kann es sich um die jeweilige Einrichtung beziehungsweise Station der Teigbearbeitungsanlage oder auch um die Umgebung der gesamten Teigbearbeitungsanlage handeln, also beispielsweise um Umgebungsdaten einer Produktionsstätte.

Das Analyseverfahren kann Teil des Teigbearbeitungsverfahrens sein.

Eine Einführung einer Bahnkoordinate nach Anspruch 2 stellt eine innerhalb des Prozesses reproduzierbar darstellbare Möglichkeit dar, den jeweiligen Teig-Anteil beziehungsweise den hieraus portionierten Teigling mit dem Markierungsparameter während des Analyseverfahrens zu markieren. Im Rahmen des Markierens kann insbesondere eine Prozessgeschwindigkeit des jeweiligen Teig-Anteils innerhalb der jeweiligen Einrichtung oder Station der Teigbearbeitungsanlage berücksichtigt werden. Hierbei kann auch eine Simulation der Teigbearbeitungsanlage herangezogen werden.

Beim Markieren nach Anspruch 3 wird genutzt, dass nach der Herstellung des portionierten Teiglings dieser zumindest während einzelner Betriebsschritte des Teigbearbeitungsverfahrens mit spezifisch zugeordneten Fördermitteln gefördert wird. Bei dem jeweiligen Fördermittel kann es sich um ein Gehänge, um ein Transportband, um eine Diele, um einen Stikkenwagen oder auch um einen Chargenträger handeln. Beim Verfolgen des markierten Teig-Anteils während der Betriebsschritte des Teigbearbeitungsverfahrens kann ein Wechsel zwischen verschiedenen Markierungstypen erfolgen, beispielsweise ein Wechsel zwischen einem Markierungstyp "Bahnkoordinate" und einem Markierungstyp "Fördermittel". Grundsätzlich kann ein portionierter Teigling auch direkt markiert werden, beispielsweise über eine optische Bilderkennungs-Zuordnung. Hierzu kann mindestens eine Kamera zur Erfassung des jeweiligen Teig-Anteils und/oder zur Erfassung des jeweiligen Teiglings eingesetzt werden.

Ein Aufbereiten der im Rahmen des Analyseverfahrens erfassten Betriebsdaten nach Anspruch 4 kann eine Datenkommunikation erleichtern und kann insbesondere unnötige Kommunikationswege zwischen beim Analyseverfahren zum Einsatz kommenden dezentralen und zentralen Prozessoren innerhalb einer Datenkommunikation vermeiden.

Eine Detailanalyse der zugeordneten Betriebsdaten nach Anspruch 5 kann zumindest zum Teil noch dezentral, also mittels eines dezentralen Prozessors, der beispielsweise Teil einer Station oder Einrichtung der Teigbearbeitungsanlage ist, und/oder zumindest zum Teil zentral, also mittels eines zentralen Prozessors, der Teil der Teigbearbeitungsanlage sein kann oder auch mit der Teigbearbeitungsanlage in Datenkommunikation steht, erfolgen. Eine dezentrale Detail-Analyse kann mit einem Edge-Device geschehen. Eine zentrale Detail-Analyse kann in einer Steuer/Regeleinrichtung der Teigbearbeitungsanlage oder auch in einem insbesondere cloudbasierten Server erfolgen.

Ein Nachregeln nach Anspruch 6 ermöglicht es, Ergebnisse des Analyseverfahrens gleich im Rahmen des Teigbearbeitungsverfahrens zu nutzen.

Eine Simulation nach Anspruch 7 ermöglicht eine Nachbildung des realen Betriebsablaufs, die zu Darstellungszwecken aber auch zu Analysezwecken vorteilhaft sein kann. Eine Nachbildung kann insbesondere an den Stellen der Teigbearbeitungsanlage erfolgen, an denen keine Mess- bzw. Betriebsdaten erhoben werden.

Die Vorteile einer Teigbearbeitungsanlage nach Anspruch 8 entsprechen denen, die vorstehend unter Bezugnahme auf das Analyseverfahren und das Teigbearbeitungsverfahren bereits erläutert wurden. Die Teigbearbeitungsanlage ist in mehrere Einrichtungen beziehungsweise Stationen zur Durchführung der verschiedenen Betriebsschritte unterteilt. Einzelne derartige Einrichtungen beziehungsweise Stationen können auch aufeinanderfolgende Betriebsschritte durchführen. Eine Einrichtung der Teigbearbeitungsanlage kann auch in mehrere Arbeitsstationen unterteilt sein.

Bei einer Teigbearbeitungsanlage nach Anspruch 9 kann das Analyseverfahren mit besonderem Vorteil genutzt werden. Im jeweiligen Edge Device kann eine Aufbereitung von erfassten Betriebsdaten und gegebenenfalls auch eine Aggregation der Betriebsdaten sowie gegebenenfalls auch eine zumindest Voranalyse der Betriebsdaten erfolgen. Entsprechende Sensoren zum Erfassen von Betriebsdaten können als Lichtschranken-Sensoren und/oder als Abstands-Sensoren ausgeführt sein. Beispielsweise kann ein Durchtritt einer Teig-Vorportion oder einer Teigportion bzw. eines Teiglings durch eine Koordinate längs eines Teig-Förderweges mittels eines entsprechenden Lichtschranken-Sensors erfasst werden. Ein Abstand zweier Komponenten, die von einer Teig-Vorportion oder einer Teigportion bzw. einem Teig-Anteil oder einem Teigling durchtreten werden, können mit Hilfe eines Abstands- bzw. Distanzsensors erfasst werden. Auch ein Gewichtssensor, beispielsweise ausgeführt durch mindestens eine Wägezelle, kann zum Einsatz kommen.

Ausführungsbeispiele der Erfindung werden nachfolgend anhand der Zeichnung näher erläutert. In dieser zeigen:

Fig. 1    perspektivisch eine innere Details preisgebende Ansicht einer Teigbearbeitungsvorrichtung in Form einer Teigbearbeitungsmaschine, die eine Mehrzahl angetriebener Teig-Bearbeitungskomponenten aufweist, als Teil einer Teigbearbeitungsanlage;

Fig. 2    ein Ablaufschema eines Teigbearbeitungsverfahrens, welches mit der Teigbearbeitungsanlage, deren Teil die Teigbearbeitungsvorrichtung ist, durchgeführt wird;

Fig. 3    schematisch Hauptkomponenten der Teigbearbeitungsanlage;

Fig. 4    ein Ablaufschema einer Simulation eines Ablaufes der Teigbearbeitung mittels sensorisch erfasster und einzelnen Schritten des Teigbearbeitungsverfahrens zugeordneter Betriebsdaten, wobei jeder der Bearbeitungsschritte mithilfe eines eigenen Modells in Form eines digitalen Zwillings modelliert und insbesondere ein Abgleich mit einer realen Abfolge der Bearbeitungsschritte durchgeführt wird;

Fig. 5    ein Ablaufschema eines Algorithmus für eine Markierung, Zuordnung und Applikation der relevanten Betriebsdaten zu einem Datenobjekt in Form eines Teig-Anteils eines während Betriebsschritten des Teigbearbeitungsverfahrens zu bearbeitenden Teigs, wobei es sich bei dem Teig-Anteil, der im Rahmen des Algorithmus mit einem vorgegebenen Markierungsparameter markiert und während der Betriebsschritte nachverfolgt wird, um einen Teig-Anteil handelt, der genau einem bei der Teigverarbeitung erzeugten Teigling oder einer Gruppe derartiger Teiglinge reproduzierbar zugeordnet wird;

Fig. 6    ein Ablaufschema eines Verfahrens zur Aufbereitung und Darstellung der erfassten und zugeordneten Betriebsdaten; und

Fig. 7    in einer zu Fig. 1 ähnlichen Darstellung eine weitere Ausführung einer Teigbearbeitungsvorrichtung in Form einer Teigbearbeitungsmaschine mit einer Mehrzahl angetriebener Teig-Bearbeitungskomponenten als Teil einer Teigbearbeitungsanlage.

Eine als Teigbearbeitungsmaschine ausgeführte Teigbearbeitungsvorrichtung 1 dient zur Herstellung einer Mehrzahl exakt portionierter bzw. dosierter und rundgewirkter Teiglinge, die beispielsweise nachfolgend zu Brötchen verarbeitet werden können. Die Teigbearbeitungsmaschine 1 ist sechsreihig ausgeführt.

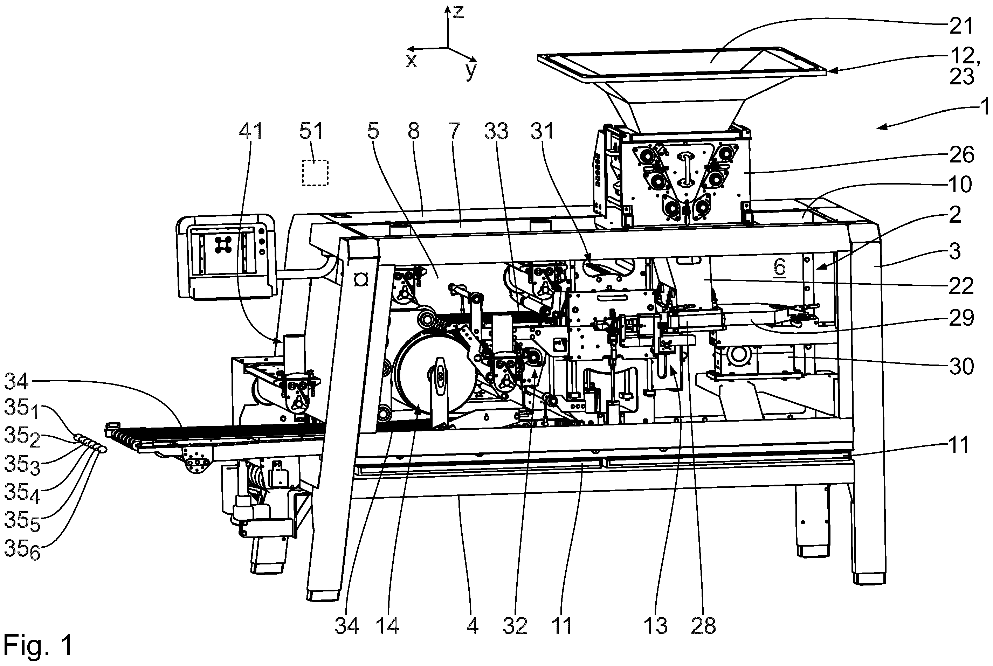

Zur Erleichterung der Beschreibung von Lagebeziehungen wird nachfolgend ein kartesisches xyz-Koordinatensystem verwendet. Die x-Richtung verläuft in der Fig. 1 längs einer horizontalen Förderrichtung der Teigbearbeitungsvorrichtung 1 und verläuft in der Fig. 1 nach links. Die y-Richtung verläuft ebenfalls horizontal und senkrecht zur Förderrichtung und verläuft in der Fig. 1 im Wesentlichen senkrecht zur Zeichenebene. Die z-Richtung verläuft vertikal und in der Fig. 1 nach oben.

Die Teigbearbeitungsmaschine 1 hat ein im Wesentlichen quaderförmiges Gehäuse 2 mit einem Gehäuserahmen 3. Ein Gehäuseboden 4 hat oberhalb eines Maschinenbodens eine erhebliche Bodenfreiheit im Bereich einiger zehn Zentimeter.

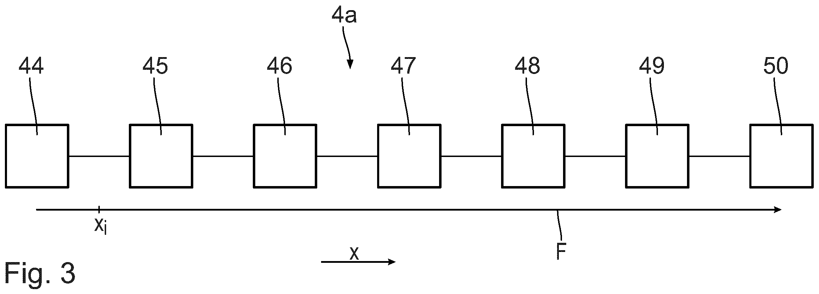

Die Teigbearbeitungsmaschine 1 hat eine Mehrzahl angetriebener Teig-Bearbeitungskomponenten, die nachfolgend noch beschrieben werden. Die Teigbearbeitungsmaschine 1 ist zudem Teil einer Teigbearbeitungsanlage 4a (vgl. Fig. 3). Ein Teigbearbeitungsverfahren, welches mit der Teigbearbeitungsanlage 4a durchgeführt werden kann, sowie Hauptkomponenten der Teigbearbeitungsanlage 4a werden nachfolgend ebenfalls noch beschrieben.

Weiterhin hat die Teigbearbeitungsmaschine 1 eine Mehrzahl von Antrieben, die mit diesen Teig-Bearbeitungskomponenten in mechanischer Antriebsverbindung stehen und die nachfolgend ebenfalls noch beschrieben werden. Eine zentrale Montageplatte 5 trägt einerseits, also zur einen Seite der Platte hin, die Teig-Bearbeitungskomponenten, also diejenigen Komponenten, die mit dem Teig in Berührung stehen, und andererseits, also zur anderen Plattenseite hin, die Antriebe für diese Teig-Bearbeitungskomponenten.

Die Montageplatte 5 ist so angeordnet, dass sie einen Innenraum 6 des Gehäuses 2 unterteilt in einen Teig-Bearbeitungsraum 7, in dem die Teig-Bearbeitungskomponenten untergebracht sind, und in einen Antriebsraum 8, in dem die Antriebe untergebracht sind. Antriebsverbindungen zwischen dem Teig-Bearbeitungsraum 7, der in der Fig. 1 dem Betrachter zugewandt ist, und dem Antriebsraum 8 verlaufen durch Durchtrittsöffnungen in der Montageplatte 5.

Die Montageplatte 5 ist vertikal stehend im Gehäuse 2 zwischen dem Gehäuseboden 4 und einem oberen Gehäusedeckel 10 angeordnet.

Auf dem Gehäuseboden 4 liegen insgesamt vier Auffangwannen 11 auf, von denen in der Fig. 1 zwei Auffangwannen 11 randseitig sichtbar sind. Die vier Auffangwannen 11 sind miteinander lösbar verbunden. Die Auffangwannen 11 sind von der Seite des Teig-Bearbeitungsraums 7 her von außen her zugänglich und können zur Entleerung aus dem Gehäuse 2 entnommen werden. Die Auffangwannen 11 dienen zum Auffangen von Teigresten, die bei der Teigbearbeitung im Teig-Bearbeitungsraum 7 anfallen.

Die Teigbearbeitungsmaschine 1 hat folgende Teig-Bearbeitungskomponenten:

- eine Teigvorportioniereinrichtung 12 zur Vorportionierung von Teig für eine nachfolgende Teigbearbeitung. Die Teigvorportioniereinrichtung 12 wird auch als Vorportionierer bezeichnet.

- eine Teigportioniereinrichtung 13 zur Vorgabe jeweils eines genau portionierten bzw. dosierten Volumens der Teiglinge.

- eine Teigwirkeinrichtung 14 zum Rundwirken der portionierten bzw. dosierten Teiglinge.

Die tragenden Verbindungen der Teig-Bearbeitungskomponenten 13 und 14 einerseits und der zugeordneten Antriebe andererseits an der Montageplatte 5 sind in Balkonbauweise ausgeführt.

Die Teigvorportioniereinrichtung 12 hat eine Mehrzahl von Walzenpaaren (nicht dargestellt in der Fig. 1). Zwischen den jeweils um eine horizontale Drehachse antreibbaren Walzen jedes Walzenpaares ist jeweils ein horizontal verlaufender Teig-Förderspalt angeordnet.

Die Walzenpaare sind zum Fördern des Teigs zwischen einer oberen Teig-Zugabeöffnung 21 und einer unteren Teig-Abgabeöffnung 22 ausgebildet. Auf die Walzenpaar-Anordnung aufgesetzt ist ein Teig-Zugabetrichter 23. Dieser hat einen oberen Zugabeabschnitt mit erstem Trichterwinkel und einen sich hieran anschließenden unteren Zugabeabschnitt mit zweitem, steilerem Trichterwinkel. Der untere Zugabeabschnitt hat also steiler verlaufende Trichterwände als der obere Zugabeabschnitt.

Der Teig-Zugabetrichter 23 stellt einen Teig-Vorratsbehälter der Teigbearbeitungsvorrichtung 1 dar.

Die Walzenpaare sind von einem Gehäuse 26 der Teigvorportioniereinrichtung 12 aufgenommen. Das Gehäuse 26 ist so ausgeführt, dass die Komponenten der Teigvorportioniereinrichtung 12 zwischen der Teig-Zugabeöffnung 21 und der Teig-Abgabeöffnung 22 umschlossen sind.

Alle Walzen der Walzenpaare der Teigvorportioniereinrichtung 12 sind über einen gemeinsamen Antriebsmotor angetrieben.

Das unterste Walzenpaar der Teigvorportioniereinrichtung 12 ist mit zwei jeweils dreiflügligen Sternwalzen (nicht in der Fig. 1 dargestellt) ausgeführt. Die Sternwalzen erzeugen vorportionierte Teigstücke bzw. Teig-Vorportionen, die der nachfolgenden Teigportioniereinrichtung 13 zugeführt werden. Die vorportionierten Teigstücke fallen durch die Teig-Abgabeöffnung 22 in eine Teigkammer 28.

Zur Teigportioniereinrichtung 13 gehört weiterhin ein Teig-Zuführkolben 29 mit einem quaderförmigen Kolbenabschnitt. Der Teig-Zuführkolben 29 wird auch als Portionierkolben bezeichnet. Der Kolbenabschnitt des Teig-Zuführkolbens 29 ist komplementär zur Teigkammer 28 ausgeführt. Der Teig-Zuführkolben 29 wird über eine Linearführung längs seines horizontalen Kolbenhubs geführt. Eine Teig-Zuführrichtung verläuft dabei längs der positiven x-Richtung. Angetrieben ist der Teig-Zuführkolben 29 über einen Servoantrieb 30, der im Antriebsraum 8 des Gehäuses 2 angeordnet ist. Der Servoantrieb 30 ist ein Beispiel für einen elektrischen Antrieb des Teig-Zuführkolbens 29.

Weiterhin hat die Teigportioniereinrichtung 13 eine Messtrommel 31 mit einer Mehrzahl von Messkammern.

Entsprechend der sechsreihigen Ausführung der Teigbearbeitungsmaschine 1 hat die Messtrommel 31 in Umfangsrichtung gleich verteilt insgesamt acht Kammersätze zu je sechs in y-Richtung nebeneinanderliegenden Messkammern. Ein Antrieb der Messtrommel 31 um deren zentrale, horizontale Trommelachse erfolgt über einen Messtrommel-Antriebsmotor, der im Antriebsraum 8 untergebracht ist.

Im Teigförderweg zwischen der Teigkammer 28 und der Messtrommel 31 ist ein Mundstück angeordnet. Ein Grundkörper des Mundstücks in dem sechs Teigdurchtrittskanäle aufgeführt sind, ist aus PETP (Polyethylenterephthalat) gefertigt. Das Mundstück kann als Teil der Teigkammer 28 verstanden werden.

Zur Teigportioniereinrichtung 13 gehört weiterhin eine Mehrzahl von Messkolben. Kolbenabschnitte der Messkolben sind einteilig aus Kunststoff. Jeweils genau einer der Messkolben ist genau einer der Messkammern zur Vorgabe eines Messkammervolumens für die Teigportionierung zugeordnet. Die jeweilige Messkammer ist zudem Teil eines Messzylinders zur Führung des jeweiligen Messkolbens. Jeweils sechs nebeneinanderliegende Messkolben bilden einen Messkolbensatz, der einem der Kammersätze der Messkammern zugeordnet ist. Die sechs Messkolben jedes Kolbensatzes werden von einer Messkolbenleiste getragen, die radial innerhalb der Messtrommel 31 angeordnet sind.

Die Messkolben sind gesteuert verlagerbar zwischen einer zurückgezogenen Messstellung, in der die Messkolben das Messkolbenvolumen zur Teigportionierung beziehungsweise Teigdosierung vorgeben, und einer radial ausgefahrenen Übergabestellung zur Übergabe des im Messkolbenvolumen portionierten bzw. dosierten Teigvolumens an die nachgeordnete Teig-Bearbeitungskomponente, nämlich an die Teigwirkeinrichtung 14.

Die im Messkolbenvolumen der Teigportioniereinrichtung 13 portionierten beziehungsweise dosierten Teigvolumina werden nachfolgend auch als Teig-Anteile beziehungsweise als Teiglinge, Teigportionen oder Teigstücke bezeichnet.

Zwischen einer in der Fig. 1 links dargestellten Übergabeseite der Messtrommel 31 und der Teigwirkeinrichtung 14 ist im Teigförderweg der Teigbearbeitungsmaschine 1 eine Übergabeeinheit 32 mit einem Übergabeförderband 33 angeordnet.

Ein Antrieb der Übergabeeinheit 32 erfolgt über mindestens einen Antriebsmotor, der im Antriebsraum 8 des Gehäuses 2 untergebracht ist.

Ein Antrieb der Teigwirkeinrichtung 14 erfolgt über mehrere, nämlich über bis zu drei Antriebsmotoren, die im Antriebsraum 8 des Gehäuses 2 untergebracht sind.

Von der Teigwirkeinrichtung 14 werden die dann rundgewirkten Teiglinge über ein weiteres Förderband 34 einer weiteren Bearbeitung, insbesondere einem Gärprozess und einem Backofen der Teigbearbeitungsanlage 4a zugeführt. Das Förderband 34 ist entsprechend der sechsreihigen Ausführung der Teigbearbeitungsmaschine 1 in sechs einzelne, nebeneinander verlaufende Einzelbänder unterteilt.

In Fig. 1 sind schematisch am Ende dieser Einzelbänder des Förderbandes 34 sechs Teig-Anteile beziehungsweise Teiglinge 35; (1=1 bis 6) zugeordnet.

Auf den Einzelbändern des Förderbandes 34 werden die Teiglinge $35_i$ nebeneinander und, entsprechend dem Arbeitstakt der Teigbearbeitungsvorrichtung 1 hintereinander gefördert. Eine hinsichtlich während des Bearbeitens zu erfassender Betriebsdaten im Rahmen von Betriebsschritten des Betriebs der Teigbearbeitungsanlage interessierende Gruppe derartiger Teig-Anteile beziehungsweise Teiglinge 35; kann genau einen einzelnen Teigling $35_i$, kann eine Reihe von Teiglingen 35; entsprechend beispielsweise der in Fig. 1 angedeuteten Teigling-Reihe $35_1$ bis $35_6$, kann eine Mehrzahl derartiger Teigling-Reihen, beziehungsweise zwei bis zehn Teigling-Reihen, kann mehrere längs eines der Einzelbänder des Förderbandes 34 hintereinander geförderte Teiglinge $35_i$, beispielsweise zwei bis zehn hintereinander geförderte Teiglinge 35; beinhalten. Bei dem Teig-Anteil, der im nachfolgenden Analyseverfahren markiert und den Betriebsdaten zugeordnet wird, kann es sich auch um einen Volumenabschnitt des ursprünglich zugegebenen Teigs oder um einen Teigstrang-Abschnitt handeln.

Zum Reinigen der Teig-Bearbeitungskomponenten können diese durch Verlagerung bzw. Demontage von Einzelkomponenten zugänglich gemacht werden.

Der Teig-Zuführkolben 29 ist verlagerbar zwischen einer rückgezogenen Aufgabestellung zur Teigaufgabe des Teigstücks aus dem Teig-Vorratsbehälter 23 und einer vorgeschobenen Förderstellung zum Fördern des Teigs des Teigstücks in die jeweilige Messkammer bis zu einer Messstellung des Messkolbens, in der die gewünscht dosierte Teigmenge in der Messkammer vorliegt.

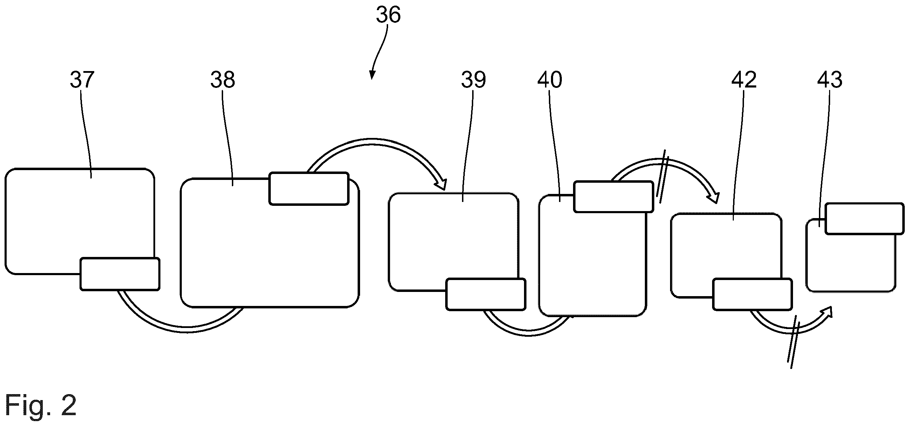

Fig. 2 zeigt schematisch ein gesamtes Teigbearbeitungsverfahren 36, welches mit der Teigbearbeitungsanlage 4a, deren Teil die Teigbearbeitungsvorrichtung 1 ist, durchgeführt werden kann.

Zu diesem gesamten Teigbearbeitungsverfahren 36 gehört ein Dosierschritt 37, der mittels einer Teigmischvorrichtung durchgeführt wird, die eine Teigbearbeitungskomponente darstellt, die der Teigbearbeitungsvorrichtung 1 vorgeordnet ist. Relevante Parameter für den Dosierschritt 37 sind eine Luftfeuchte, Temperaturen der Teigzutaten, ein Stärke- und/oder Fettgehalt von Mehl als Teigbestandteil sowie ein Mehl-Mischungsverhältnis. Weitere relevante Parameter können Umgebungsdaten sein, beispielsweise eine Umgebungstemperatur.

An den Dosierschritt 37 schließt sich ein Knetschritt 38 an, der mit einer Knetvorrichtung durchgeführt wird, die der Mischvorrichtung nachgeordnet und der Teigbearbeitungsvorrichtung 1 vorgeordnet ist. Parameter, die den Knetschritt 38 beeinflussen, sind die zu knetende Teigmenge, eine Energieaufnahme beim Kneten, eine Teigtemperatur beim Kneten, eine Mischzeit, die insbesondere beim Dosierschritt 37 aufgewandt wurde, eine Knetzeit insbesondere beim Knetschritt 38 sowie gegebenenfalls eine Ruhezeit des Teigs zwischen dem Dosierschritt 37 und dem Knetschritt 38. Ein weiterer Parameter des Knetschritts 38 kann ein Vorhandensein von freiem Oberflächenwasser auf dem zu knetenden Teig sein.

An den Knetschritt 38 schließt sich ein Teigteil- und Wirkschritt 39 an, der unter anderem mit der Teigwirkeinrichtung 14 der Teigbearbeitungsvorrichtung 1 durchgeführt wird. Parameter, die den Teil-/Wirkschritt 39 beeinflussen, sind das Teiggewicht der jeweils dosierten Teigportion und/oder des jeweiligen Teigstücks $35_i$. Weitere Parameter, die den Teil-/Wirkschritt 39 beeinflussen, sind ein Arbeitsdruck, also eine Kolbenkraft $F_K$, die eine Soll-Gegenkraft $F_P$ erzeugt, eine Wirkintensität, die über einen entsprechenden Antrieb der Teigwirkeinrichtung 14 erfasst werden kann, sowie eine Geometrie des jeweiligen Teiglings $35_i$.

An dem Teil-/Wirkschritt 39 schließt sich beim Teigbearbeitungsverfahren 36 ein Form-/Veredelungsschritt 40 beziehungsweise ein Aufbereitungsschritt an. Hierbei wird der Teigling 35; geformt und gegebenenfalls durch Zugabe weiterer Zusatzkomponenten, wie zum Beispiel einer Bestreuung, veredelt. Auch ein Stüpfeln des Teiglings 35; kann Teil des Form-/Veredelungsschritts 40 sein. Parameter, die den Form-/Veredelungsschritt 40 beeinflussen, sind eine Geometrie des Teiglings 35; sowie eine Position und eine Geometrie des Teiglings 35; während der Veredelung.

Der Form-/Veredelungsschritt 40 wird von einer Teig-Bearbeitungskomponente der Teigbearbeitungsanlage 4a durchgeführt, die der Teigbearbeitungsvorrichtung 1 nachgeordnet ist. Eine Baugruppe dieser nachgeordneten Teig-Bearbeitungskomponente ist in der Fig. 1 bei 41 angedeutet.

An den Form-/Veredelungsschritt 40 schließt sich ein Lager-/Gärschritt 42 an, der in einem Gärschrank der Teigbearbeitungsanlage 4a durchgeführt wird, der wiederum eine der Teigbearbeitungsvorrichtung 1 nachgeordnete Teig-Bearbeitungskomponente darstellt. Parameter, die diesen Lager-/Gärschritt 42 beeinflussen, sind eine Teigtemperatur des Teiglings 35; zu Beginn des Lager-/Gärschritts 42, eine Teigling-Temperatur am Ende des Lager-/Gärschritts 42, eine Lager-/Gärzeit sowie eine Volumenveränderung des Teiglings 35; während des Lager-/Gärschritts 42. Weitere Parameter können Umgebungsdaten sein, beispielsweise eine Umgebungstemperatur sowie eine Umgebungs-Luftfeuchtigkeit.

An dem Lager-/Gärschritt 42 schließt sich beim gesamten Teigverarbeitungsverfahren 36 ein Backschritt 43 an, bei dem es sich auch um einen Garschritt beziehungsweise Frittierschritt handeln kann und der in einem Backofen beziehungsweise einer sonstigen Backeinrichtung oder Fritteuse der Teigbearbeitungsanlage 4a durchgeführt wird, der wiederum eine der Teigbearbeitungsvorrichtung 1 nachgeordnete Teig-Bearbeitungskomponente darstellt. Parameter, die den Backschritt 43 beeinflussen, sind die Backtemperatur, die Backzeit sowie ein Typ des den Backschritt 43 durchführenden Backofens.

Fig. 3 zeigt Hauptkomponenten der Teigbearbeitungsanlage 4a.

Zur Teigbearbeitungsanlage 4a gehört eine Teig-Dosiereinrichtung beziehungsweise Teigmischeinrichtung 44, mit der der Dosierschritt 37 des Teigbearbeitungsverfahrens 36 durchgeführt wird. Weiterhin gehört zur Teigbearbeitungsanlage 4a eine Teig-Kneteinrichtung 45, mit der der Knetschritt 38 durchgeführt wird. Ein Beispiel für die Kneteinrichtung 45 ist beschrieben in der EP 3 613 290 A1.

Weiterhin gehört zur Teigbearbeitungsanlage 4a eine Teig-Teileinrichtung 46, mit der ein Teilschritt des Teig-Teilschritts 39 durchgeführt wird, sowie eine Teig-Wirkeinrichtung 47, mit der ein Wirkschritt des Teig-Teilschritts 39 durchgeführt wird. Ein Beispiel für eine Ausführung der Teig-Teileinrichtung 46 ist die Teilportioniereinrichtung 13, die vorstehend in Zusammenhang mit der Fig. 1 erläutert wurde. Ein Beispiel für eine Ausführung der Teig-Wirkeinrichtung 47 ist die Teigwirkeinrichtung 14, die vorstehend in Zusammenhang mit der Fig. 1 erläutert wurde. Die Teig-Teileinrichtung 46 und die Teig-Wirkeinrichtung 47 können in einer zusammengefassten Teigteil- und Wirkeinrichtung beispielsweise in Form der Teigbearbeitungsvorrichtung 1 nach Fig. 1 zusammengefasst werden und führen dann zusammen den Teig-Teilschritt 39 des Betriebsverfahrens durch.

Weiterhin gehört zur Teigbearbeitungsanlage 4a eine Teigportions-Veredelungseinrichtung 48, mit der der Form/Veredelungsschritt 40 durchgeführt wird. Teileinheiten dieser Teigportions-Veredelungseinrichtung 48 können sein eine Bestreueinheit oder eine Stüpfeleinheit. Eine beispielhafte Baugruppe der Teigportions-Veredelungseinrichtung 48 ist die in der Fig. 1 bei 41 angedeutete Baugruppe.

Weiterhin gehört zur Teigbearbeitungsanlage 4a eine Teig-Gäreinrichtung 49, beispielsweise in Form eines Gärschranks. Mit der Teig-Gäreinrichtung 49 wird der Lager/Gärschritt 42 durchgeführt.

Weiterhin kann zur Teigbearbeitungsanlage 4a eine in der Zeichnung nicht näher dargestellte Teig-Aufbereitungseinrichtung gehören, die der Aufbereitung des Teiges dient. Auch die Teig-Aufbereitungseinrichtung kann als Signalgenerierungs-Teigbearbeitungseinrichtung und/oder als Signalempfangs-Teigbearbeitungseinrichtung dienen.

Weiterhin gehört zur Teigbearbeitungsanlage 4a ein Backofen 50, mit dem der Backschritt 43 durchgeführt wird.

Anstelle des Backofens 50 kann auch eine Fritteuse zur Teigbearbeitungsanlage gehören oder auch eine andere Einrichtung zum Garen beziehungsweise Backen des Teigs.

Mit Hilfe der Kneteinrichtung 45 kann mindestens eine Teig-Zustandsgröße beziehungsweise ein Teigparameter sensorisch erfasst werden. Bei dieser sensorisch über die Teig-Kneteinrichtung 45 erfassbaren Teig-Zustandsgröße handelt es sich um einen Teig-Elastizitätsparameter $c_d$ und um einen Teig-Viskositätsparameter $d_d$. Details zur Bestimmung dieser Parameter $c_d$ und da sind aufgeführt in der EP 3 613 290 A1. Bei der Teig-Kneteinrichtung 45 handelt es sich um eine Signalgenerierungs-Teigbearbeitungseinrichtung mit mindestens einem Sensor zum Messen mindestens einer Teig-Zustandsgröße.

Eine weitere derartige Signalgenerierungs-Teigbearbeitungseinrichtung mit mindestens einem Sensor zum Messen mindestens einer Teig-Zustandsgröße ist die Teig-Teileinrichtung 46 beziehungsweise Teig-Portioniereinrichtung 13 der Teigbearbeitungsvorrichtung 1. Mit der Teigportioniereinrichtung 13 können sensorisch die Teig-Zustandsgrößen Teig-Federkonstante $c_T$ und Teig-Dämpfungsparameter $d_T$ erfasst werden. Mit Hilfe einer Auswertung, die derjenigen entspricht, die in der EP 3 613 290 A1 beschrieben ist, kann auch mit der Teig-Teileinrichtung 46 beziehungsweise der Teig-Wirkeinrichtung 14 der Teigbearbeitungsvorrichtung 1 der Teig-Elastizitätsparameter $c_d$ und/oder der Teig-Viskositätsparameter $d_d$ gemessen, also sensorisch erfasst werden.

Die Teigbearbeitungsanlage 4a hat zudem Sensoren beziehungsweise Messgeräte zum Messen mindestens einer der nachfolgenden Teig-Zustandsgrößen:

- Teig-Temperatur vor, beim oder nach dem jeweiligen Bearbeitungsschritt,

- Teig-Dichte,

- Teig-Feuchtigkeit,

- Stärkegehalt von Mehl als Teigbestandteil,

- Fettgehalt des Teiges,

- Mehl-Mischungsverhältnis des Teiges,

- zu knetende Teigmenge,

- Energieaufnahme beim Teigkneten,

- Teig-Mischzeit in der Teig-Dosiereinrichtung 44 und/oder in der Teig-Kneteinrichtung 45,

- Teig-Knetzeit,

- Teig-Ruhezeit zwischen dem Dosieren in der Teig-Dosiereinrichtung 44 und dem Kneten in der Teig-Kneteinrichtung 45,

- freies Oberflächenwasser auf dem Teig beim Kneten in der Teig-Kneteinrichtung,

- Gewicht einer Teigportion,

- Teig-Arbeitsdruck beim Teigportionieren in der Teig-Teileinrichtung 46,

- Wirkintensität beim Teig-Wirken in der Teig-Wirkeinrichtung 47,

- Geometrie einer Teigportion,

- Teig-Gärzeit,

- Teig-Volumenänderung während des Gärens in der Teig-Gäreinrichtung 49,

- Backtemperatur,

- Backzeit,

- Backofentyp des Backofens 50,

- Teig-pH-Wert,

- Teig-Adhäsionsparameter.

Zur Erfassung des freien Oberflächenwassers auf dem Teig beim Kneten in der Teig-Kneteinrichtung 45 kann insbesondere ein optischer Sensor dienen.

Der Teig-pH-Wert kann insbesondere optisch vermessen werden.

Der Teig-Adhäsionsparameter kann indirekt oder auch direkt bei einer Teig-Vorportionierung oder einer Teigportionierung oder auch durch Auswertung einer beim Bemehlen eingesetzten Mehlmenge ermittelt werden. Ein Rückschluss auf den Teig-Adhäsionsparameter kann auch durch eine Vermessung von Teigportions-Trajektorien an Fallstufen der Teigportionen längs eines Teigportionswegs innerhalb der Teigbearbeitungsanlage gezogen werden.

Die Teigparameter, die für die Teigbearbeitungsschritte 37 bis 40, 42, 43 relevant sind, können mit entsprechenden Sensoren ermittelt und/oder über Algorithmen einer zentralen Steuer/Regeleinrichtung 51 (vgl. die schematische Darstellung in der Fig. 1), gegebenenfalls unter Hinzunahme von Sensordaten, berechnet werden. Derart erfasste Teigparameter können dann mit Hilfe der Steuer/Regeleinrichtung 51 für eine prozessschrittübergreifende Steuerung/-Regelung der Teigbearbeitungsanlage 4a genutzt werden.

Diese Steuerung/Regelung kann in Vorwärtsrichtung erfolgen, sich über einen erfassten Teigparameter also auf die Steuerung einer nachgeordneten Teig-Bearbeitungskomponente der Teigbearbeitungsanlage 4a richten, oder kann auch in Rückwärtsrichtung verlaufen, kann sich also über den erfassten Teigparameter an eine vorgeordnete Teig-Bearbeitungskomponente der Teigbearbeitungsanlage 4a richten. Die Begriffe "nachgeordnet" und "vorgeordnet" beziehen sich jeweils auf die Relation zur Teig-Bearbeitungskomponente, die dem erfassten Teigparameter zugeordnet ist.

Im Rahmen des Teigbearbeitungsverfahrens 36 kann beispielsweise die Teig-Kneteinrichtung 45 als Signalgenerierungs-Teigbearbeitungseinrichtung dienen. Mit Hilfe dieser Teig-Kneteinrichtung 45 und der Steuer/Regeleinrichtung 51 können dann auf Grundlage der beispielsweise gemessenen Teigparameter $c_d$, da die Teig-Dosiereinrichtung 44, die Teigportions-Veredelungseinrichtung oder die Teigportions-Gäreinrichtung 49 gesteuert oder geregelt werden.

Sensoren der Teig-Kneteinrichtung 45 können sein eine Drehmoment-Messeinheit, eine Drehzahl-Messeinheit oder eine Drehpositions-Messeinheit sowie ein Temperatursensor oder ein Zustandssensor. Diesbezüglich wird verwiesen auf die EP 3 613 290 A1.

Auch die Teig-Teileinrichtung 46, die Teig-Wirkeinrichtung 47 und der Backofen 50 können mit Hilfe der sensorisch über die Teig-Kneteinrichtung 45 erfassten Teigparameter gesteuert oder geregelt werden. So kann beispielsweise eine Gärtemperatur, eine Gärfeuchtigkeit oder auch eine Gärzeit an die erfassten Parameter Teig-Elastizität $c_d$ und Teig-Viskosität $d_d$ angepasst werden. Auch die Backzeit oder auch ein Mischungsverhältnis in der Teig-Dosiereinrichtung 44 können abhängig von diesen erfassten Teigparametern ca, da variiert werden. Entsprechendes gilt für eine Wirkdauer oder eine Wirkintensität.

Wie vorstehend bereits erläutert, kann auch die Teig-Teileinrichtung 46, beispielsweise in Form der Teigportioniereinrichtung 13, als Signalgenerierungs-Teigbearbeitungseinrichtung des Betriebsverfahrens dienen. Mit den über die Teigportioniereinrichtung 13 erfassbaren Teigparametern Federkonstante $c_T$ und Dämpfungsparameter $d_T$ können dann mit Hilfe der Steuer/Regeleinrichtung 51 die Teig-Dosiereinrichtung 44, die Teig-Kneteinrichtung 45, die Teig-Portionierungs-Veredelungseinrichtung 48 oder die Teigportionierungs-Gäreinrichtung 49 gesteuert oder geregelt betrieben werden. Dies gilt entsprechend auch für die Teig-Wirkeinrichtung 47 und den Backofen 50. Über die sensorisch erfassten Teigparameter Federkonstante $c_T$ und Dämpfungsparameter $d_T$ kann also beispielsweise im Rahmen einer Rückwärtsregelung eine Knetzeit oder auch ein Mischungsverhältnis beim Dosierschritt 37 gesteuert oder geregelt vorgegeben werden. Im Rahmen einer Vorwärtsregelung kann beispielsweise eine Gärzeit oder eine Backzeit vorgegeben werden.

Im Rahmen des Betriebsverfahrens 36 umstellbare Arbeitszustände der Dosiereinrichtung 44 ergeben sich beispielsweise aus unterschiedlichen Dosierzeiten, die über Dosierventile vorgegeben werden können.

Unterschiedliche umstellbare Arbeitszustände der Kneteinrichtung 45 ergeben sich aus unterschiedlichen Drehzahlen oder Positionen oder auch unterschiedlichen vorgebbaren Trajektorien eines Knetwerkzeugs der Kneteinrichtung 45.

Unterschiedliche umstellbare Arbeitszustände der Teig-Teileinrichtung 46 ergeben sich zum Beispiel aus unterschiedlichen Messpositionen des Messkolbens oder auch aus unterschiedlichen Trajektorien der jeweiligen Teigportion an einer Fallstufe innerhalb der Teigbearbeitungsanlage. Auch unterschiedliche Drehmomentprofile von Antriebskomponenten der Teig-Teileinrichtung 46, insbesondere des Zuführkolbens, ergeben unterschiedliche umstellbare Arbeitszustände. Weitere unterschiedliche Arbeitszustände ergeben sich aufgrund einer Ölmenge bzw. eines Trennmittels, aufgrund eines Füllstandes eines Teig-Vorratsbehälters, z. B. des Teig-Zugabetrichters 23 oder auch eines vor- bzw. nachgelagerten Trichters oder Trichterabschnitts.

Unterschiedliche umstellbare Arbeitszustände der Teig-Wirkeinrichtung 47 ergeben sich aus unterschiedlichen Wirkdruck-Zuständen oder auch aus unterschiedlichen Wirkgeschwindigkeits-Vorgaben oder auch aus unterschiedlichen Wirkamplituden beziehungsweise Wirkausschlägen. Weitere Arbeitszustände können sich aus einer ermittelten Wirkgüte der Teig-Wirkeinrichtung 47 ergeben, beispielsweise einer individuell für jede der Wirkkammern der Teig-Wirkeinrichtung 47 ermittelte Rundheit der gewirkten Teigportion.

Unterschiedliche umstellbare Arbeitszustände der Teig-Veredelungseinrichtung 48 ergeben sich unterschiedlichen Befeuchtungsintensitäten, aus unterschiedlichen vorgebbaren Bestreuintensitäten und/oder Stüpfeltiefen und/oder Stüpfeltypen. Auch unterschiedliche Bemehlungsintensitäten können als umstellbare Arbeitszustände der Teig-Veredelungseinrichtung beziehungsweise der Teig-Aufbereitungseinrichtung vorgegeben werden. Weitere Arbeitszustände ergeben sich aufgrund einer Relation von Bandgeschwindigkeiten von Transportbändern der Teigbearbeitungsanlage zu bestimmten Bearbeitungszeitpunkten innerhalb der Teig-Veredelungseinrichtung 48. Hierbei kann ein Transport der jeweiligen Teigportion beispielsweise innerhalb eines Stüpfels, innerhalb einer Ausrichteinheit für die Teigportion oder auch innerhalb eines Mehlstreuers berücksichtigt werden.

Unterschiedliche umstellbare Arbeitszustände der Teig-Gäreinrichtung 49 ergeben sich aus unterschiedlichen Gärzeiten, also beispielsweise unterschiedlichen Förderwegen und/oder Fördergeschwindigkeiten von Gärgut-Gehängen innerhalb eines Gärschranks. Je nach gewünschter Gärzeit können innerhalb des Gärschranks beispielsweise Gärschleifen und/oder Gärräume übersprungen bzw. überbrückt werden.

Auch unterschiedliche Gärraumtemperaturen beziehungsweise unterschiedliche Gärraumfeuchtigkeiten können umstellbare Arbeitszustände der Teig-Gäreinrichtung 49 sein.

Unterschiedliche umstellbare Arbeitszustände des Backofens 50 oder der Back- beziehungsweise Gareinrichtung ergeben sich beispielsweise aus unterschiedlichen Backprogrammen des Backofens 50.

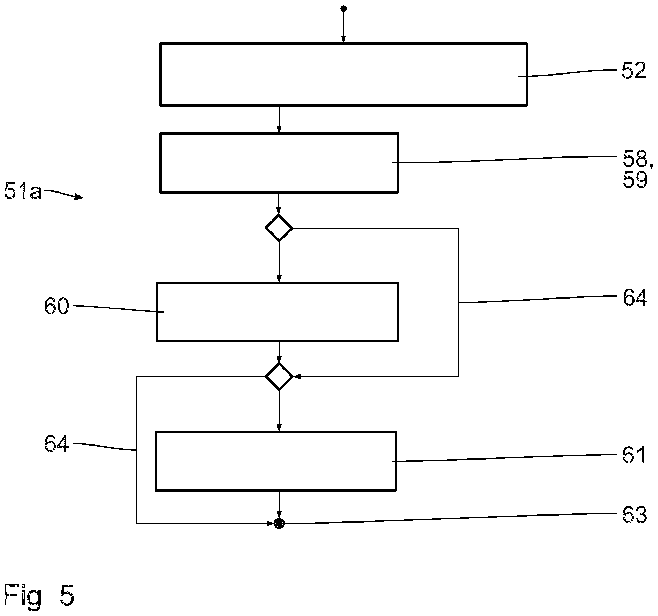

Zum Analysieren des Teigbearbeitungsverfahrens 36, also des Betriebs der Teigbearbeitungsanlage 4a, wird ein Analyseverfahren 51a (vgl. Fig. 5) durchgeführt, das nachfolgend erläutert wird. Das Analyseverfahren 51a kann Teil des Teigbearbeitungsverfahrens 36 sein.

Im Rahmen des Analyseverfahrens 51a wird zunächst in einem Vorgabeschritt 52 mindestens ein Markierungsparameter für den während der Betriebsschritte des Teigbearbeitungsverfahrens 36 zu bearbeitenden Teig-Anteil beziehungsweise Teigling 35; vorgegeben. Ein derartiger Markierungsparameter ist bei der Teigbearbeitungsanlage 4a mit der Teigbearbeitungsvorrichtung 1 eine Bahnkoordinate $x_i$ einer Teig-Förderbahn F der Teigbearbeitungsanlage 4a, längs der die Teig-Anteile beziehungsweise Teiglinge $35_i$ in Betrieb gefördert werden. Eine derartige Bahnkoordinate x; längs der Teig-Förderbahn F ist in der Fig. 3 beispielhaft veranschaulicht.

Bei der Bahnkoordinate handelt es sich also um die Koordinate längs der Teig-Förderbahn F zwischen der Teig-Dosiereinrichtung 44 und dem Backofen 50, wobei vereinfachend im Rahmen der Beschreibung als derartige Bahnkoordinate die x-Koordinate gewählt ist. Der während des Vorgabeschritts 52 des Analyseverfahrens 51a vorgegebene Markierungsparameter ist die Bahnkoordinate $x_i$, auf der der jeweilige Teig-Anteil beziehungsweise der Teigling 35; längs der Teig-Förderbahn F unterwegs ist. Solange der Teig noch nicht in die Teiglinge $35_i$ portioniert ist, wird derjenige Teig-Anteil, aus dem der Teigling 35; dann später portioniert wird, entsprechend identifiziert und dessen Bahnkoordinate $x_i$ bei der Vorgabe als Markierungsparameter gewählt. Das Markieren des Teig-Anteils beziehungsweise Teiglings 35; erfolgt digital, indem einem Datensatz, zu dem der jeweilige Teig-Anteil beziehungsweise Teigling 35; gehört, die entsprechende Bahnkoordinate x; zugeordnet wird.

Fig. 5 zeigt beispielhaft eine Ausführung für einen Teil des Analyseverfahrens 51a. Im Rahmen der Vorgabe 52 des Markierungsparameters wird beim Analyseverfahren eine Integration einer Prozessgeschwindigkeit für die Bahnkoordinate x; digital modelliert.

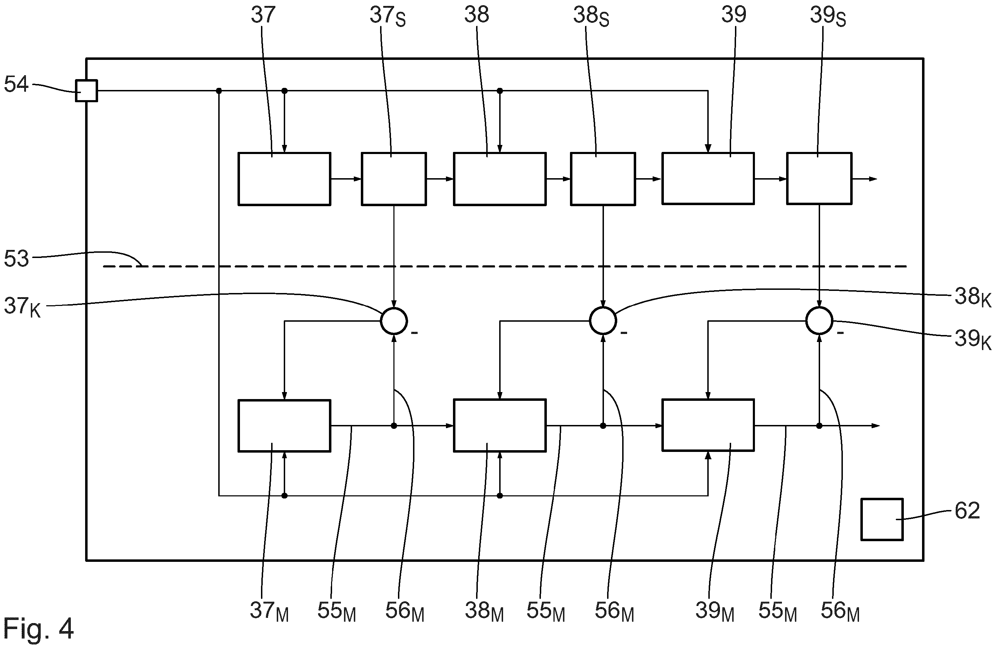

Ein entsprechendes Modell veranschaulicht die Fig. 4. Jedem der vorstehend erläuterten Betriebsschritte 37 bis 43 wird bei dieser Modellierung ein Modell-Betriebsschritt $37_M$ bis $43_M$ zugeordnet. Diese Modell-Betriebsschritte $37_M$,... sind Bestandteile einer Simulation des Teigbearbeitungsverfahrens 36.

Diese Modellierung ist in der Fig. 4 anhand der Betriebsschritte Dosieren 37, Kneten/Mischen 38 und Teilen/Wirken 39 veranschaulicht. Fig. 4 zeigt, getrennt durch eine virtuelle Trennebene 53, oben das reale Betriebsverfahren mit den Schritten 37 bis 39 und zugeordneten Sensoren zur Erfassung entsprechender Betriebsdaten bei diesen Betriebsschritten, wie vorstehend erläutert. Unterhalb der virtuellen Trennebene 53 ist in der Fig. 4 ein Modell des Betriebsverfahrens in Form eines digitalen Zwillings (digital twin) veranschaulicht mit den Modell-Betriebsschritten $37_M$ bis $39_M$.

Über Prozessknoten $37_K$, $38_K$, $39_K$ stehen die Sensoren 37s, 38s, 39s mit den Modell-Betriebsschritten $37_M$, $38_M$, $39_M$ in Signalverbindung. Die Sensoren 37s bis 39s senden dabei Sensorwerte, die vorverarbeitet sein können, an die Prozessknoten $37_K$ bis $39_K$. Die Prozessknoten $37_K$ bis $39_K$ senden, gegebenenfalls, nach Vor- beziehungsweise Weiterverarbeitung, diese Sensor- beziehungsweise Betriebsdaten weiter an die Modell-Betriebsschritte $37_M$ bis $39_M$. An den Prozessknoten $37_K$ bis $39_K$ kann auch eine Summation von Daten zwischen den Sensoren 37s bis 39s einerseits und den Modell-Betriebsschritten $37_M$ bis $38_M$ andererseits zum Abgleich zwischen der Realität und dem Modell erfolgen.

Die Betriebsschritte 37 bis 39 beziehungsweise die zugeordneten Einrichtungen der Teigbearbeitungsanlage 4a einerseits und die Modell-Betriebsschritte $37_M$ bis $39_M$ andererseits stehen mit einer Eingabe-Schnittstelle 54 zur Modellierung in Signalverbindung. Hierüber können Einstellparameter für das Betriebsverfahren, insbesondere Rezeptwerte für die jeweils zu produzierenden Teiglinge beziehungsweise das zu produzierende Backgut, sowohl an die Betriebsschritte und die zugeordneten Einrichtungen der Teigbearbeitungsanlage 4a als auch an die den Betriebsschritten zugeordneten Modell-Betriebsschritte weitergegeben werden.

Die Modell-Betriebsschritte $37_M$ bis $39_M$ stehen über Signalverbindungen $55_M$, die auch bidirektional ausgeführt sein können, miteinander in Signalverbindung. Diese Signalverbindungen $55_M$ stehen wiederum, insbesondere zur Rückkopplung, über Signal-Teilverbindungen $56_M$ mit den jeweiligen Prozessknoten $37_K$ bis $39_K$ in Signalverbindung. Diese Rückkopplung ermöglicht durch eine insbesondere KI-basierte Verarbeitung in den Prozessknoten $37_K$ bis $39_K$ einen Abgleich der jeweiligen Modell-Betriebsschritte $37_M$ bis $39_M$ mit den realen Betriebsschritte 37 bis 39. Abhängig von der Qualität beziehungsweise dem Ergebnis eines derartigen Abgleichs kann dann wiederum von den Prozessknoten $37_K$ bis $39_K$ ein Steuerungseinfluss auf die Betriebsschritte 37 bis 43 beziehungsweise die zugehörigen Einrichtungen der Teigbearbeitungsanlage 4a durchgeführt werden. Ergebnisse des Modellabgleichs können dann also Einfluss auf den realen Ablauf des Teigbearbeitungsverfahrens 36 nehmen.

Die durch das Modell nach Fig. 4 gewonnenen Erkenntnisse können beim Analyseverfahren des Betriebs der Teigbearbeitungsanlage 4a genutzt werden. Insbesondere können Erkenntnisse darüber verfeinert werden, wie genau ein zeitlicher Verlauf der Bahnkoordinate x; eines jeweiligen Teig-Anteils beziehungsweise Teiglings 35; längs der Teig-Förderbahn F während des Betriebsverfahrens ist.

Anhand dieser Erkenntnisse wird der aktuell bearbeitete Teig-Anteil beziehungsweise Teigling 35; in einem Markierungsschritt 58 mit dem Markierungsparameter, also der jeweiligen Bahnkoordinate $x_i$ markiert. Dies kann durch Ermitteln eines Zeitstempels mit dem jeweiligen Teig-Anteil beziehungsweise Teigling 35; erfolgen.

Es kann dann zeitlich verfolgt werden, wo, insbesondere an welcher x-Position, sich der jeweilige Teig-Anteil beziehungsweise Teigling 35; während des Teigbearbeitungsverfahrens in der Teigbearbeitungsanlage 4a längs der Teig-Förderbahn F befindet. Dies erfolgt in einem Verfolgungsschritt 59 des Analyseverfahrens 51a.

In einem nachfolgenden Erfassungsschritt 60 des Analyseverfahrens 51a werden die Sensor-Betriebsdaten des markierten Teig-Anteils beziehungsweise Teiglings 35; während des Bearbeitens im Rahmen der Betriebsschritte 37 bis 43 erfasst. Dem jeweiligen Teig-Anteil beziehungsweise Teigling 35; werden also vom Dosieren 37 bis zum Backen 43 die vorstehend diskutierten Sensor- beziehungsweise Betriebsdaten teig-anteilsgenau beziehungsweise teiglinggenau oder auch teigling-gruppengenau zugeordnet. Dabei erfolgt auch ein Zuordnen der aktuellen Einstell- beziehungsweise Rezeptwerte, die über die Eingabe-Schnittstelle 54 eingegeben wurden, zum jeweils markierten Teig-Anteil beziehungs-weise Teigling $35_i$.

Während des Durchlaufens des gesamten Betriebsverfahrens werden dem markierten Teig-Anteil beziehungsweise Teigling 35; die beim Betriebsverfahren beim Durchlaufen der Betriebsschritte 37 bis 43 jeweils erfassten Betriebs- beziehungsweise Sensordaten zugeordnet. Dies erfolgt in einem Zuordnungsschritt 61.

Die erfassten Betriebsdaten können dann mittels einer Betriebsdaten-Anzeige 62 dargestellt werden. Diese Darstellung erfolgt zugeordnet zum jeweils markierten Teig-Anteil beziehungsweise Teigling $35_i$. Dies erfolgt in einem Darstellungsschritt 63.

Eine derartige Anzeige 62 ist in der Fig. 4 veranschaulicht. Hierbei kann es sich um eine graphische Benutzerschnittstelle (graphical user interface, GUI) handeln. Eine Darstellung der erfassten Betriebsdaten kann auch beispielsweise über ein Endgerät in Form eines Tablets oder eines Smartphones mithilfe einer entsprechenden App erfolgen.

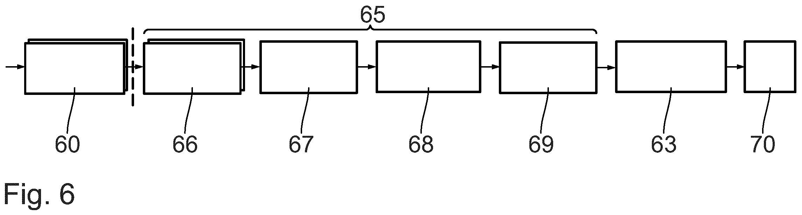

Fig. 5 und 6 veranschaulichen den Darstellungsschritt 63 wiederum als einen Prozessknoten, der mit weiteren Prozessknoten zwischen den Schritten 58 und 59 einerseits und 60 andererseits sowie zwischen den Schritten 60 und 61 in Signalverbindung stehen kann, wie in der Fig. 5 angedeutet. Es ist dann möglich, neben den zugeordneten Messwerten auch noch andere Rohdaten im Rahmen des Darstellungsschritts 63 mit der Anzeige 62 anzuzeigen. Diese Signalverbindungen 64, die auch bidirektional ausgeführt sein können, ermöglichen zudem eine weitere Detailanalyse des Betriebsverfahrens. An diesen Prozessknoten zwischen den Schritten 58 bis 60 kann auch jeweils eine Datenabfrage erfolgen.

Fig. 6 veranschaulicht einen Ablauf zum Aufbereiten der im Rahmen des Erfassungsschrittes 60 erfassten und zugeordneten Betriebsdaten. Die Betriebsdaten können im Rahmen des Erfassungsschrittes von der Steuer/Regeleinrichtung 51 bereitgestellt werden, die eine SPS-Maschinensteuerung aufweisen kann.

Das nachfolgende Aufbereitungsverfahren 65 kann, ausgehend von den erfassten Roh-Betriebsdaten zunächst dezentral, also am Ort der jeweiligen Einrichtung der Teigbearbeitungseinrichtung 4a, die den Betriebsschritt mit dem Teig-Anteil beziehungsweise Teigling 35; durchführt, durchgeführt werden und kann insbesondere bei Folgeschritten des Aufbereitungsverfahrens zunehmend zentral, beispielsweise in einem Rechner der Steuer/Regeleinrichtung 51 oder auch in einem Cloud-Server, stattfinden.

Im Rahmen einer zumindest teilweise dezentralen Aufbereitung des Aufbereitungsverfahrens 65 können Edge Devices zum Einsatz kommen, die auf den Bereich des Edge Computings bekannt sind. Insbesondere können Techniken aus dem Bereich Internet of Things (IoT) zum Einsatz kommen.

Bei dem Aufbereitungsverfahren 65 werden zunächst die Roh-Betriebsdaten, die beim Erfassungsschritt 60 des Analyseverfahrens 51a gewonnen wurden, im Rahmen eines Vor-Aufbereitungsschritts 66 dezentral in einem jeweiligen Edge Device der Einrichtung der Teigbearbeitungsanlage 4a aufbereitet. Hierbei kann beispielsweise eine Datenmittelung oder auch eine Datenglättung erfolgen oder es kann im Rahmen des Vor-Aufbereitungsschritts 66 entschieden werden, wann die erfassten Betriebsdaten vom jeweiligen Edge Device weitergegeben werden.

In einem nachfolgenden Aggregationsschritt 67 des Aufbereitungsverfahrens 65 werden Datenobjekte, die Ergebnis des Vor-Aufbereitungsschritts 66 sind, aggregiert. Hierbei können insbesondere Metadaten aus den Vor-Aufbereiteten Betriebsdaten erzeugt werden. Im Rahmen des Aggregationsschritt 67 können beispielsweise Betriebsdaten zusammengefasst werden, die ein Teig-Anteil beziehungsweise Teigling 35; während des Teigbearbeitungsverfahrens 36 akkumuliert. Der Aggregationsschritt 67 findet je nach der Art der durchgeführten Aggregation entweder zumindest teilweise noch im Edge Device oder auch in einem übergeordneten Prozessor der jeweiligen Einrichtung oder auch in einem zentralen Prozessor der Steuer/Regeleinrichtung 51 statt.

Im Rahmen des Aggregationsschritts 67 können sämtliche Betriebsdaten, die vom Markierungsparameter, also beispielsweise von einem Zeitstempel, abhängen, mittels verknüpfter Datenobjekte aggregiert werden. Bei diesen Datenobjekten kann es sich um ein dem Teig-Anteil zugeordnetes Objekt, beispielsweise um mindestens eines der Objekte "Knetcharge", "Teigstrang", "Teiglingreihe" oder "Teigling" handeln. Diesen Objekten können dann die jeweils auf sie wirkenden, zugeordneten Sensor- beziehungsweise Betriebsdaten zugeordnet werden. Bei diesen Daten kann es sich um die Sensordaten, um Stellgrößen, um Rezeptparameter sowie um sonstige gemessene Teigeigenschaften handeln, die auf das entsprechende spezifische Datenobjekt eingewirkt haben.

Nach dem Aggregationsschritt 67 erfolgt im Aufbereitungsverfahren 65 ein Analyseschritt 68, bei dem die aggregierten Datenobjekte analysiert werden. Hierbei kann beispielsweise ein Vergleich mit Toleranzwerten oder auch eine Trendanalyse stattfinden.

Dem Analyseschritt 68 folgt beim Aufbereitungsverfahren 65 ein Speicherschritt 69 nach. Abgespeicherte Analyseergebnisse werden in einem entsprechenden Speichermedium der Steuer/Regeleinrichtung 51 oder auch im Speicher eines insbesondere cloudbasierten Servers gespeichert.

Abhängig vom Analyseergebnis kann beim Analyseverfahren 51a ein Nachregeln mindestens eines Betriebsparameters der Teigbearbeitungsanlage 4a erfolgen. Beispielsweise kann dann, wenn im Rahmen des Analyseverfahrens 51a erkannt wird, dass, gegebenenfalls, durch entsprechende Betriebs- beziehungsweise Sensordaten bei der Dosierung 37 beim Kneten 38, beim Teigteilen/Wirken 39 ein Gewicht eines Teiglings 35; außerhalb eines Toleranzgewicht-Bereichs liegt, durch entsprechende Ansteuerung des Teigteil-/Wirkschritts 39 eine Anpassung eines Teiglinggewichts erfolgen. Ein derartiger Nachregelschritt ist in der Fig. 6 als Schritt 70 veranschaulicht.

Die beim Analyseverfahren 51a erfassten und zugeordneten Betriebs- und Sensordaten ermöglichen eine Anpassung einer Simulation des Teigbearbeitungsverfahrens 36, also insbesondere eine Anpassung eines Betriebsmodells, welches vorstehend anhand der Fig. 4 erläutert wurde.

Im Rahmen des Markierungsschritts 58 kann zum Markieren des Teig-Anteils beziehungsweise des Teiglings 35; ein Fördermittel markiert werden, auf dem der Teigling 35; gefördert wird, der nach dem Teigteil/Wirkschritt 39 zumindest teilweise aus einem ursprünglich markierten Teig-Anteil 35; abgeteilt wird. Bei einem derartigen Fördermittel kann es sich um ein Gehänge handeln, in dem der jeweilige Teigling 35; während des Lager/Gärschritts 42 angeordnet ist. Während des Lager/Gärschritts 43 kann ein Markieren des Teiglings 35; also durch ein Markieren des jeweiligen Gehänges bewerkstelligt werden. Bei dem Fördermittel, das markiert werden kann, kann es sich auch im eine Diele handeln, auf der ein Teigling 35; während des Teigbearbeitungsverfahrens 36 abgelegt wird. Alternativ oder zusätzlich kann ein derartiges Fördermittel, welches im Rahmen des Markierungsschritts 58 markiert wird, auch ein Stikkenwagen oder auch ein Chargenträger sein. Insbesondere eine gezielte Überwachung einer jeweiligen Backcharge ist dann möglich. Hierbei kann insbesondere auch ein Knetbatch dokumentiert werden.

Beim Verfolgen 59 des markierten Teig-Anteils beziehungsweise Teiglings 35; während des Analyseverfahrens 51a kann ein Wechsel zwischen dem Markierungstypen "Bahnkoordinate" und/oder "Fördermittel" erfolgen.

Beim Markieren 58 kann der Teigling im Rahmen des Analyseverfahrens auch direkt markiert werden, beispielsweise über eine Bilderkennungs-Zuordnung. Hierbei wird der Teigling 35; nach dem Teigteil-/Wirkschritt 39 optisch erfasst und aufgrund spezifischer Erkennungsmerkmale identifiziert und markiert.

Mithilfe der erfassten, zugeordneten und dargestellten Betriebsarten kann ein permanentes Monitoring und ein Verfolgen des Teiges in der Teigbearbeitungsanlage, insbesondere eines ausgewählten Teig-Anteils beziehungsweise Teiglings oder auch einer Gruppe von Teiglingen in der Anlage erfolgen.

Die Darstellung der erfassten Betriebsdaten kann in Echtzeit erfolgen. Abhängig von den erfassten Betriebsdaten kann, gegebenenfalls automatisiert, Kontakt mit Wartungspersonal hergestellt werden.

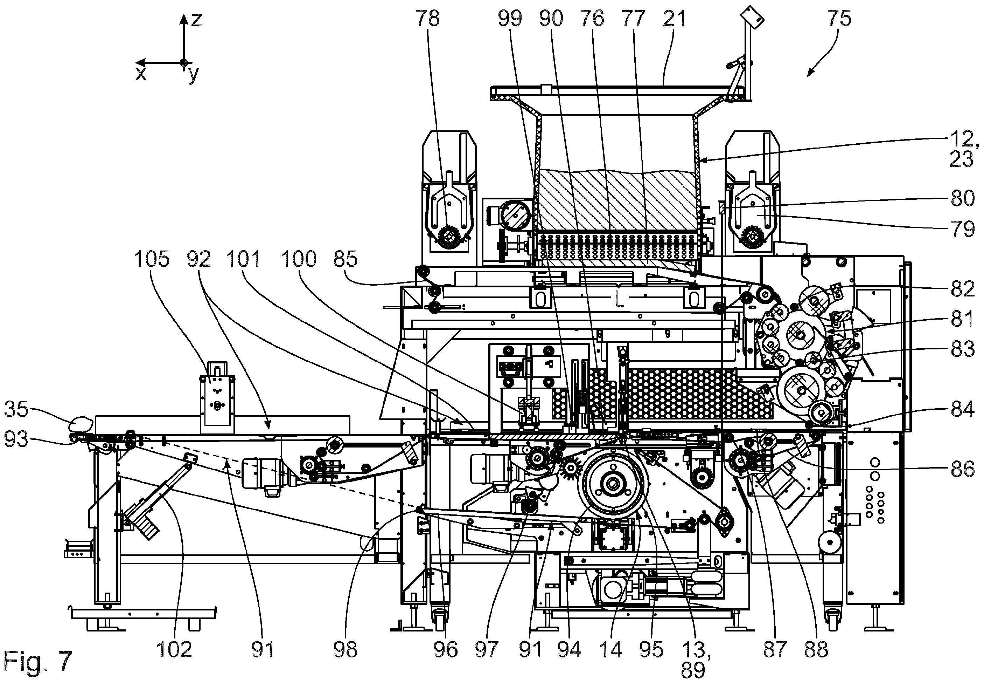

Anhand der Fig. 7 wird nachfolgend eine weitere Ausführung einer als Teigbearbeitungsmaschine ausgeführten Teigbearbeitungsvorrichtung 75 zur Herstellung exakt portionierter bzw. dosierter und rund gewirkter Teiglinge beschrieben. Komponenten und Funktionen, die denjenigen entsprechen, die vorstehend unter Bezugnahme auf die Teigbearbeitungsvorrichtung 1 bereits erläutert wurden, tragen die gleichen Bezugsziffern und werden nicht nochmals im Einzelnen diskutiert.

Unterhalb des Teig-Zugabetrichters 23 hat die Teigbearbeitungsvorrichtung 75 eine Sternwalze 76 als Teig-Vorportionierkomponente zur Erzeugung von Teigstrang-Vorportionen 77 mit einer Vorportionierungslänge L längs der x-Koordinate. Einem Arbeitsbereich der Sternwalze 76 wird über eine Bemehlungseinheit 78 der jeweiligen Teigstrang-Vorportion 77 Mehl von unten zugeführt. Eine weitere Bemehlungseinheit 79 ist im Förderweg der jeweiligen Teigstrang-Vorportion 77 nach der Sternwalze 76 zur Bemehlung der jeweiligen Teigstrang-Vorportion 77 von oben angeordnet.

Zwischen der Sternwalze 76 und dieser weiteren Bemehlungseinheit 79 ist ein Teigstrang-Vorportions-Sensor 80, ausgeführt als Lichtschranke, angeordnet. Dieser Teigstrang-Vorportions-Sensor 80 springt an, wenn der Teig-Förderweg zwischen der Sternwalze 76 und der weiteren Bemehlungseinheit 79 einerseits durch einen führenden Abschnitt der jeweiligen Teigstrang-Vorportion 77 unterbrochen wird und andererseits nach Durchlaufen dieser Teigstrang-Vorportion 77 wieder freigegeben wird. Mit dem Teigstrang-Vorportions-Sensor 80 lässt sich also im Zusammenwirken mit mindestens einer Teig-Förderkomponente der Teigbearbeitungsvorrichtung 75 eine exakte Länge der Teigstrang-Vorportion 77 vermessen. Der Teigstrang-Vorportions-Sensor 80 kann auch als Lichtvorhang-Sensor gestaltet sein, so dass über diesen nicht nur eine Längenbestimmung der Teigstrang-Vorportion 77 möglich ist, sondern auch, wiederum zusammenwirkend mit mindestens einer Förderkomponente der Teigbearbeitungsvorrichtung 75, eine Form bzw. Volumenbestimmung der Teigstrang-Vorportion 77.

Im Förderweg nach der weiteren Bemehlungseinheit 79 ist ein S-förmiger Walzenstuhl 81 der Teigbearbeitungsvorrichtung 75 wiederum mit einer Mehrzahl von Walzenpaaren angeordnet. Der Walzenstuhl 81 ist Teil der Teigvorportioniereinrichtung 12.

Am Eingang des Walzenstuhls 81 ist ein Einlauf-Distanzsensor 82 angeordnet. Im Bereich eines Walzen-Durchlasses des Walzenstuhls 81 ist ein Durchlass-Distanzsensor 83 angeordnet. Im Bereich eines Auslaufes des Walzenstuhls 81 ist ein Auslauf-Distanzsensor 84 angeordnet. Mit den Distanzsensoren 82, 83 und 84 lässt sich eine Teigstrangdicke der jeweiligen Teigstrang-Vorportion 77 am Einlauf, im Durchlassbereich und am Auslauf des Walzenstuhls 81 messen.

Zwischen der Sternwalze 76 und dem Walzenstuhl 81 wird die Teigstrang-Vorportion 77 über ein Einlaufband 85 der Teigbearbeitungsvorrichtung 75 gefördert.

Im Walzenstuhl 81 erfolgt ein schrittweises bzw. kontinuierliches Walzen der Teigstrang-Vorportion 77 von einer ersten, größeren Einlaufdicke im Bereich des Einlauf-Distanzsensors 82 über eine im Vergleich hierzu kleinere Durchlass-Dicke im Bereich des Durchlass-Distanzsensors 83 bis auf eine wiederum kleinere Auslauf-Dicke im Bereich des Auslauf-Distanzsensors 84. Die jeweilige Teigstrangdicke kann mit den Distanzsensoren 82, 83 und 84 überwacht werden. Es kann also insbesondere die Einhaltung einer Soll-Teigstrangdicke geregelt werden.

Die jeweils gemessene Teigstranglänge, die Teigstrang-Form oder das Teigstrang-Volumen, gemessen über den Sensor 80, und die Teigstrang-Dicken, gemessen über die Distanzsensoren 82 bis 84, stellen Betriebsdaten der Teigstrang-Vorportion 77, also eines mit dem vorstehend bereits erläuterten Analyseverfahren analysierten Teig-Anteils, dar.

Nach dem Auslauf-Distanzsensor 84 wird die gewalzte Teigstrang-Vorportion 77 auf ein Gewichtsband 86 übergeben und hin zu einem Gewichtssensor 87 gefördert. Der Gewichtssensor 87 ist durch zwei in Förderrichtung hintereinander angeordnete Wägezellen ausgestaltet. Mit dem Gewichtssensor 87 lässt sich als weiteres Betriebsdatum ein Gewicht eines jeweiligen Teigstrangabschnitts, der auf den Wägezellen des Gewichtssensors 87 lastet, messen.

Zwischen dem Auslauf-Distanzsensor 84 und dem Gewichtssensor 87 ist im Förderweg des gewalzten Teigstrangs ein Teigstrang-Sensor 88 angeordnet, der als Lichtschranken-Sensor ausgeführt ist. Mit dem Teigstrang-Sensor 88 kann erfasst werden, ob der ausgewalzte Teigstrang vom Walzenstuhl 81 auf das Gewichtsband 86 übergeben wurde. Auch Unterbrechungen des gewalzten Teigstrangs können mit dem Teigstrang-Sensor 88 erkannt werden.

Zusammen mit dem Gewichtssensor 87 gehört ein Messer 89 zum Schneiden des ausgewalzten Teigstrangs in die Teigportionen bzw. Teiglinge 35 zu einer Teigportioniereinrichtung 13 der Teigbearbeitungsvorrichtung 75. Das Teigstrang-Messer 89 ist im Förderweg des gewalzten Teigstrangs nach dem Gewichtssensor 87 und nach dem Gewichtsband 86 angeordnet.

Das Teigstrang-Messer 89 ist eine Ausführung einer Teig-Teileinrichtung nach Art der vorstehend beschriebenen Teig-Teileinrichtung 46.

Dem Teigstrang-Messer 89 nachgeordnet ist im Förderweg der Teigportionen 35 eine Förderweiche 90, mit der wahlweise ein Wirk-Förderweg 91 für die Teigportionen 35 oder ein Stanz-Förderweg 92 für die Teigportionen 35 vorgegeben werden kann. Der Wirk-Förderweg 91 verläuft dabei unterhalb des Stanz-Förderweges. Im Bereich eines zwischen dem Wirk-Förderweg 91 und dem Stanz-Förderweg 92 umstellbaren Auslauf-Übergabebandes 93 vereinigen sich diese Förderwege 91 und 92 wiederum, so dass unabhängig von diesem Förderweg 91, 92 eine Ausgabe der entsprechend bearbeiteten Teigportionen 35 an eine Folgekomponente der Teigbearbeitungsanlage gewährleistet ist. Das Auslauf-Übergabeband 93 ist in der Fig. 7 in der Stanz-Stellung gezeigt, in der es einen Abschnitt des Stanz-Förderweges 92 bildet. Gestrichelt ist bei 91 eine Wirk-Stellung des Auslauf-Übergabebandes 93 angedeutet, in der dieses einen Abschnitt des Wirk-Förderweges 91 bildet.

Im Wirk-Förderweg 91 ist der Förderweiche 90 die Teigwirkeinrichtung 14 in Form einer Wirktrommel mit Wirkkammern 94 und einem Wirkband 95 nachgeordnet. Die Wirktrommel, also die Teigwirkeinrichtung 14, der Teigbearbeitungsvorrichtung 75 ist eine Ausführung der vorstehend erläuterten Teig-Wirkeinrichtung.

Der Wirktrommel 14 wiederum im Förderweg nachgeordnet ist ein Förderband 96 zum Führen der Teigportionen 35 von der Wirkeinrichtung 14 hin zum Auslauf-Übergabeband 93. Das Auslauf-Übergabeband 93 kann, vergleichbar zum Förderband 34 der Teigbearbeitungsvorrichtung 1, als Spreizband ausgeführt sein.

Die Teigbearbeitungsvorrichtung 75 ist wiederum mehrreihig ausgeführt, wie vorstehend im Zusammenhang mit der Teigbearbeitungsvorrichtung 1 bereits erläutert, z. B. vierreihig, sechsreihig oder achtreihig.

Im Förderweg des Förderbandes 96 ist nach der Wirktrommel der Wirkeinrichtung 14 eine Andrucktrommel 97 angeordnet, mit der wahlweise die Teigportionen 35 abgeflacht werden können. Teil des Förderbandes 96 kann nach der Andruckrolle 97 eine Wendeeinrichtung 98 für die Teigportionen 35 sein.

Im Stanz-Förderweg 92 ist dem Messer 89 zum Erzeugen der Teigportionen 35 nachgeordnet eine Zentriereinheit 99 zur Bahnkorrektur der Teigportionen 35 vor einer Teigbearbeitungskomponente 41, die im Falle der Teigbearbeitungsvorrichtung 75 als Stanzeinheit 100 ausgeführt ist. Über die Stanzeinheit 100 kann bei der Teigbearbeitungsvorrichtung 75 wiederum ein Form-/Veredelungsschritt 40 vorgenommen werden, beispielsweise das Ausstanzen eines Lochs in die Teigportion 35 zur Vorbereitung beispielsweise einer Donutherstellung. Die Stanzeinheit 100 der Teigbearbeitungsvorrichtung 75 ist ein Beispiel für die vorstehend erläuterte Teigportions-Veredelungseinrichtung 48.

Im Bereich der Stanzeinheit 100 wird die jeweilige Teigportion 35 über ein Prozessband 101 geführt und, insbesondere wiederum über ein Spreizband, hin zum gemeinsamen Auslauf-Übergabeband 93 gefördert. Im Stanz-Förderweg nach der Stanzeinheit 100 kann wiederum eine Wendeeinrichtung für die gestanzten Teigportionen 35 angeordnet sein.

Das Auslauf-Übergabeband 93 kann zwischen dem Wirk-Förderweg 91 (gestrichelt in der Fig. 7) und dem Stanz-Förderweg 92 angetrieben umstellbar sein, wofür in der Fig. 7 ein Stellantrieb 102 veranschaulicht ist.

Mit der Teigbearbeitungsvorrichtung 75 werden wiederum die vorstehend erläuterten Schritte "Teigteilen 39" und "Teigwirken/Teigformen 40" durchgeführt. Das weitere Analyseverfahren erfolgt dann so, wie vorstehend im Zusammenhang mit der Teigbearbeitungsvorrichtung 1 bereits erläutert. Die Sensoren 80, 82 bis 84, 87 und 88 dienen dabei einerseits zur Durchführung des Verfolgens 59 der markierten Teigportion 35 und zum Erfassen 60 der Betriebsdaten während des Bearbeitens der markierten Teigportion 35.

Die Teigbearbeitungsvorrichtung 75 kann zusätzlich zu den erläuterten Sensoren auch mindestens ein Edge Device zum dezentralen Aufbereiten der jeweils sensorisch erfassten Betriebsdaten aufweisen.

Bei einer Betriebsanalyse einer Teigbearbeitungsanlage, zu der die Teigbearbeitungsvorrichtung 75 gehört, kann beispielsweise eine Soll-Länge des jeweiligen Teiglings 35$_i$ mit einer Ist-Länge des Teiglings 35$_i$ im Bereich des Messers 89 verglichen werden und die erfasste Ist-Länge als Betriebsdatum im Analyseschritt 61 (vgl. oben, Fig. 5) dem entsprechend markierten Teigling 35$_i$ zugeordnet werden.

Die Ist-Länge des jeweiligen Teiglings 35$_i$, also die tatsächlich geschnittene Ist-Länge, kann durch ein mathematisches Integral einer Geschwindigkeit eines Transports des geschnittenen Teiglings über die Zeit zwischen zwei Schnitten des Messers 89 ermittelt werden. Alternativ kann die Ist-Länge des jeweiligen Teiglings 35$_i$ auch direkt, beispielsweise optisch, gemessen werden.

Ebenfalls als Betriebsdaten erfasst (obiger Schritt 60) werden Ist-Teigband-Dicken der durch den Walzenstuhl 81 hindurchlaufenden Teigstrang-Vorportion 77. Hierzu werden mit den Distanzsensoren 82, 83 und 84 des Walzenstuhls 81 entsprechende Dickenparameter als Betriebsdaten erfasst und dem entsprechend markierten Teig-Anteil 35$_i$ zugeordnet. Es kann dabei insbesondere ein Vergleich dieser Dicken-Istwerte, die mittels der Distanzsensoren 82, 83, 84 gemessen werden, mit Sollwert-Vorgaben erfolgen.

Über dem Spreizband 93 kann je nach Ausführung der Teigbearbeitungsvorrichtung 75 eine Kamera 105 angeordnet sein, die in der Fig. 7 schematisch veranschaulicht ist. Die Kamera 105 kann entsprechende Qualitätsmerkmale bzw. Betriebsdaten der jeweils markierten Teiglinge 35$_i$ erfassen (Schritt 60), zuordnen (Schritt 61), darstellen (Schritt 63), aufbereiten (Schritt 65) und analysieren (Schritt 68). Qualitätsmerkmale bzw. Betriebsdaten, die mittels der Kamera 105 erfasst und verarbeitet werden können, sind beispielsweise Abmessungen der erfassten Teiglinge 35$_i$, eine Form des jeweiligen erfassten Teiglings 35$_i$ sowie eine Oberflächenbeschaffenheit bzw. Textur des jeweils erfassten Teiglings 35$_i$. Diese Qualitätsmerkmale bzw. Betriebsdaten können einem digitalen Zwilling des jeweiligen Teiglings 35$_i$ aggregiert werden, wie vorstehend im Zusammenhang mit der Fig. 4 bereits erläutert.

Ursache-Wirkungs-Zusammenhänge zwischen Produktqualität der verarbeiteten Teiglinge, also den Qualitätsmerkmalen, einerseits und den erfassten Betriebsdaten der Teiglinge 35$_i$ andererseits können dann mit Hilfe einer KI-basierten Prozessregelung identifiziert und zugeordnet werden, wie insbesondere vorstehend im Zusammenhang mit der Fig. 4 erläutert. Diese Ursache-Wirkungs-Zusammenhänge können eine Basis für automatisierte Bedienerhinweise zur Parameter-Anpassung von Betriebsparametern der Teigbearbeitungsanlage im Falle abweichender Produktqualität sein.

Wenn beispielsweise mit der Teigbearbeitungsvorrichtung 75 eckige Teiglinge 35$_i$ mit einem Einzelgewicht von 80 g und einer Länge von 50 mm zunächst produziert werden, und die Bedienperson den Anlagenparameter "Soll-Teiglänge" von 50 mm auf 75 mm umstellt, mit dem Ziel, dass die Teigbearbeitungsvorrichtung 75 beim selben Einzelgewicht nun Teiglinge von 75 mm Länge herstellen soll, produziert die Teigbearbeitungsvorrichtung 75 zunächst unverändert weiter, da das Messer 89 das Teigling-Gewicht regelt, indem die Schnittlänge der Teiglinge 35; automatisch angepasst wird. Bei gegebener Teigstrangdicke ändert sich aufgrund des unveränderten Teiglingsgewichts also zunächst nichts an der Schnittlänge des Messers 89 und die Teigling-Länge bleibt zunächst unverändert bei 50 mm.

Die im Rahmen des Analyseverfahrens, beispielsweise durch Auswertung von Daten der Kamera 105, erfolgende Qualitätsbeurteilung der digitalen Zwillinge der Teiglinge 35; führt nun zum Resultat einer Qualitäts-Abweichung aufgrund der Soll-/Ist-Differenz der geschnittenen Teigling-Ist-Länge von 50 mm zur nun vorgegebenen Soll-Länge von 75 mm. Die Bedienperson bekommt nun aufgrund im Rahmen der vorherigen Identifizierung erfassten und abgespeicherten Ursache-Wirkungs-Zusammenhängen von einer Darstelleinheit der Teigbearbeitungsvorrichtung 75 den Hinweis über die vorhandene Qualitätsabweichung mit einem Parameter-Änderungshinweis, um eine Dickenvorgabe für die Walzenpaare des Walzenstuhls 81 zu verringern. Dies kann dann entweder von der Bedienperson manuell umgestellt werden oder auch automatisiert erfolgen. Aufgrund dieser Verringerung der Durchlaufweiten des Walzenstuhls 81 ergibt sich ein entsprechend dünnerer Teigstrang, so dass bei gleichem Teigling-Einzelgewicht von 80 g nun eine größere Teigling-Ist-Länge von 75 mm wie gewünscht resultiert.

Im weiteren Verlauf der Teigling-Produktion kann beispielsweise die Überwachung von Qualitätsmerkmalen der Teiglinge 35; durch die Kamera 105 ergeben, dass die nun hergestellten Teiglinge 35; eine verbesserungsfähige Oberflächenbeschaffenheit aufweisen. Beispielsweise unerwünschte Längsrillen auf der Teigling-Oberfläche können beim vorstehend beschriebenen Beispiel dadurch beseitigt werden, dass im Bereich des Durchlass-Sensors ein Anpressdruck einer Durchlasswalze des Walzenstuhls 81 erhöht wird. Hierdurch kann eine Walzqualität des Teigstrangs am Ausgang des Walzenstuhls 81 verbessert werden. Beispielsweise kann ein Sollwert für einen Walzenspalt an der Durchlasswalze, der über den Durchlass-Distanzsensor 83 und/oder den Auslauf-Distanzsensor 84 überwacht wird, verringert werden. Es ergibt sich dann die gewünschte bessere Oberflächenqualität der so produzierten Teiglinge $35_i$.

Entsprechend können Eingriffe in Betriebsparameter und/oder in Sollwerte der Teigbearbeitungsanlage in Vorwärts- und/oder Rückwärtsrichtung eines Prozess-Förderweges des Teiges durchgeführt werden.

Mittels der verschiedenen Sensoren der Teigbearbeitungsvorrichtungen 1 bzw. 75 können die Teig-Anteile, also die entsprechenden Abschnitte der Teigstrang-Vorportionen, des Teigstrangs selbst sowie der Teiglinge 35; jeweils längs des Förderweges des Teigs durch die Teigverarbeitungsanlage geortet werden. Dieses Orten kann zur Beeinflussung einer Bearbeitung eines jeweiligen Teig-Anteils 35; in Vorwärtsrichtung genutzt werden, was auch als Produkt-Tracking bezeichnet wird. Alternativ oder zusätzlich kann von einem bereits bearbeiteten Teig-Anteil 35; ein Rückbezug aufgrund der erfassten Betriebsdaten und Qualitätsmerkmale dieses schon bearbeiteten Teig-Anteils 35; auf zu verändernde Anlagenparameter für den Förderweg vorgelagerte Teig-Anteile $35_i$ geschlossen werden, die dann mit Hilfe ihres jeweiligen Orts-Markierungsparameters x; hinsichtlich ihrer aktuellen Bearbeitungsposition längs des Teig-Förderweges in der Teigbearbeitungsanlage entgegen der Teigförderrichtung erfasst werden können. Dieses Orten der Teig-Anteile 35; entgegen der Teig-Förderrichtung wird auch als Produkt-Tracing bezeichnet.

Ein Teig-Tracking kann über eine Integration der jeweiligen Transport-Geschwindigkeiten des zu erfassenden Teig-Anteils 35; erfolgen. Eine jeweils beim digitalen Zwilling simulierte Position kann mit Hilfe der vorhandenen Sensoren innerhalb der Teigbearbeitungsanlage, insbesondere mittels entsprechender Lichtschranken-Sensoren und/oder Kameras, validiert werden. Eine Geschwindigkeitsintegration kann diskret erfolgen, beispielsweise sekündlich. Die Geschwindigkeitsintegration kann für jeden Geschwindigkeitsbereich von Teig-Fördergeschwindigkeiten entsprechender Teig-Fördereinheiten innerhalb der Teigbearbeitungsanlage 4a separat erfolgen. Die Geschwindigkeitsintegration kann für jedes herzustellende Teigprodukt separat erfolgen.

Es gilt insbesondere:

$$s(t) = \int_{t_0}^{t} v(t) \cdot dt$$

$$(1)$$

$$s_i = s_{i,start} + \sum_{m=0}^{\frac{t_{max}}{T}} v_{m,b} \cdot T$$

$$(2)$$

Hierbei sind:

s eine zurückgelegte Strecke des jeweiligen markierten Teig-Anteils 35; [mm];

i ein Indix des jeweiligen Teig-Anteils $35_i$,

$t_{max}$ eine vergangene Zeit [s];

T eine Abtastperiode [s];

m ein Index einer Zeitvariablen;

v eine Transportgeschwindigkeit [mm/s];

b ein Abschnittsbereich einer Bahnkoordinate x längs des Teigförderwegs.

Über diese Beschreibung ist sowohl eine Vorwärtsintegration mit einer Simulation einer Position des Teig-Anteils in Vorwärtsrichtung des Teigförderweges möglich als auch eine Rückwärtsintegration in Gegenrichtung. Es ist also bei einem Teigling-Anteil 35;, der an einer bestimmten Position des Teigförderweges innerhalb der Teigbearbeitungsanlage angekommen ist, jederzeit möglich, entweder den weiteren Teigbearbeitungsweg zu simulieren oder auch in Rückwärtsrichtung die Teig-Entstehungsgeschichte seit dem Dosieren und dem Zusammensetzen des für diesen Teig-Anteil zu verarbeitenden Teigs zu analysieren bzw. zu verifizieren.

**Patentansprüche**

1. Verfahren zum Analysieren eines Betriebs einer Teigbearbeitungsanlage (4a) mit mindestens zwei der nachfolgenden Betriebsschritte:

    - Dosieren (37) einer Zusammensetzung eines zu verarbeitenden Teigs und Bereitstellen des entsprechend dosierten Teigs,
    - Kneten und/oder Mischen (38) des bereitgestellten, dosierten Teigs,
    - Teilen (39) des gekneteten und/oder gemischten Teigs in weiterzuverarbeitende Teiglinge,
    - Wirken und/oder Formen (40) der Teiglinge,
    - Lagern und/oder Gären (42) der gewirkten und/oder geformten Teiglinge,
    - Backen (43) der gelagerten und/oder gegärten Teiglinge,

    mit folgenden Analyseschritten:

    - Vorgeben (52) mindestens einen Markierungsparameters ($x_i$) für einen Teig-Anteil ($35_i$) des während der Betriebsschritte zu bearbeitenden Teigs,
    - Markieren (58) des Teig-Anteils ($35_i$) mit dem Markierungsparameter ($x_i$),
    - Verfolgen (59) des markierten Teig-Anteils ($35_i$) während der Betriebsschritte (37 bis 43),
    - Erfassen (60) von Betriebsdaten während des Bearbeitens des markierten Teig-Anteils ($35_i$) im Rahmen der Betriebsschritte (37 bis 43),
    - Zuordnen (61) der erfassten Betriebsdaten zum markierten Teig-Anteil ($35_i$),
    - Darstellen (63) der erfassten und dem markierten Teig-Anteil zugeordneten Betriebsdaten mittels einer Betriebsdaten-Anzeige (62).

2. Verfahren nach Anspruch 1, **dadurch gekennzeichnet, dass** zum Markieren (58) des Teig-Anteils ($35_i$) eine Bahnkoordinate ($x_i$) einer Teig-Förderbahn (F) der Teigbearbeitungsanlage (4a) markiert wird, längs der die Teig-Anteile ($35_i$) im Betrieb gefördert werden.

3. Verfahren nach Anspruch 1 oder 2, **dadurch gekennzeichnet, dass** zum Markieren (58) des Teig-Anteils ($35_i$) ein Fördermittel markiert wird, auf dem ein Teigling ($35_i$) gefördert wird, der nach dem Teilen zumindest teilweise aus dem zum markierenden Teig-Anteil abgeteilt wird.

4. Verfahren nach einem der Ansprüche 1 bis 3, **gekennzeichnet durch** ein Aufbereiten (65) der erfassten Betriebsdaten.

5. Verfahren nach einem der Ansprüche 1 bis 4, **dadurch gekennzeichnet, dass** nach dem Zuordnen (61) eine Detailanalyse (68) der zugeordneten Betriebsdaten erfolgt.

6. Verfahren nach Anspruch 5, **dadurch gekennzeichnet, dass** nach der Detail-Analyse (68) ein Nachregeln (70) mindestens eines Betriebsparameters der Teigbearbeitungsanlage (4a) erfolgt.

7. Verfahren nach einem der Ansprüche 1 bis 6, **dadurch gekennzeichnet, dass** anhand der erfassten und zugeordneten Betriebsdaten eine Simulation ($37_M$, $38_M$, $39_M$,...) eines Ablaufes der Teigbearbeitung angepasst wird.

8. Teigbearbeitungsanlage zur Durchführung eines Verfahrens nach einem der Ansprüche 1 bis 7, mit mindestens zwei der nachfolgenden Teigbearbeitungseinrichtungen:

   - Eine Teig-Dosiereinrichtung (44) zur dosierten Zugabe von zu mischenden Teigzutaten,
   - eine Teig-Kneteinrichtung (45) zum Kneten eines Teiges aus vorbereiteten Teigzutaten,
   - eine Teig-Teileinrichtung (46) zur Portionierung des Teiges in Teiglinge ($35_i$),
   - eine Teig-Wirkeinrichtung (47) zum Wirken der Teiglinge ($35_i$),
   - eine Teigportions-Veredelungseinrichtung (48) für vorbereitete Teigportionen,
   - eine Teigportions-Gäreinrichtung (49) für vorbereitete Teigportionen,
   - einen Backofen (50) zum Backen der Teigportionen ($35_i$).

9. Teigbearbeitungsanlage nach Anspruch 8, **dadurch gekennzeichnet, dass** mindestens eine der Teigbearbeitungseinrichtungen einen Sensor und ein Edge Device zum dezentralen Aufbereiten sensorisch erfasster Betriebsdaten aufweist.

Fig. 1

EP 4 541 194 A1

Fig. 2

EP 4 541 194 A1

Fig. 3

Fig. 4

Fig. 5

Fig. 6

Fig. 7

Europäisches
Patentamt

European
Patent Office

Office européen
des brevets

# EUROPÄISCHER RECHERCHENBERICHT

Nummer der Anmeldung

EP 24 20 6018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/290345 A1 (GARDEN ALEXANDER JOHN [US] ET AL) 12. Oktober 2017 (2017-10-12) * Absätze [0078] - [0079], [0082], [0083], [0088], [0131], [0132], [0185], [0187], [0188], [0197]; Abbildungen 1,2A,8,10-15 * - - - - - | 1-9 | INV. A21C5/00 A21C1/00 A21C7/00 A21C9/00 A21C9/08 A21C11/00 |
| X | WO 2019/070733 A1 (ZUME INC [US]) 11. April 2019 (2019-04-11) * Seiten 32-59; Abbildungen 1A,1B,10,18 * - - - - - | 1,8 | A21C14/00 |
| A | CN 116 725 049 A (SHANGHAI WEIFAN FOOD MACHINERY CO LTD) 12. September 2023 (2023-09-12) * Absätze [0013] - [0085]; Abbildungen 1-2 * - - - - - | 1-9 | |
| A | EP 3 613 288 A1 (WERNER & PFLEIDERER IND BACKTECHNIK GMBH [DE]) 26. Februar 2020 (2020-02-26) * Absätze [0042] - [0062]; Abbildung 7 * - - - - - | 1-9 | |

RECHERCHIERTE SACHGEBIETE (IPC)

A21C

Der vorliegende Recherchenbericht wurde für alle Patentansprüche erstellt

| Recherchenort | Abschlußdatum der Recherche | Prüfer |
|---|---|---|
| Den Haag | 19. Februar 2025 | De Meester, Reni |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 20 6018

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2025

| Im Recherchenbericht angeführtes Patentdokument | Datum der Veröffentlichung | Mitglied(er) der Patentfamilie | Datum der Veröffentlichung |
|---|---|---|---|
| US 2017290345 A1 | 12-10-2017 | AU 2017248224 A1 | 15-11-2018 |
| | | BR 112018070731 A2 | 12-02-2019 |
| | | CA 3020517 A1 | 12-10-2017 |
| | | CL 2018002860 A1 | 05-04-2019 |
| | | CN 109475129 A | 15-03-2019 |
| | | CO 2018012072 A2 | 22-11-2018 |
| | | EP 3429363 A2 | 23-01-2019 |
| | | JP 2019516358 A | 20-06-2019 |
| | | KR 20180127475 A | 28-11-2018 |
| | | TW 201740340 A | 16-11-2017 |
| | | US 2017290345 A1 | 12-10-2017 |
| | | WO 2017177041 A2 | 12-10-2017 |
| WO 2019070733 A1 | 11-04-2019 | EP 3665640 A1 | 17-06-2020 |
| | | WO 2019070733 A1 | 11-04-2019 |
| CN 116725049 A | 12-09-2023 | KEINE | |
| EP 3613288 A1 | 26-02-2020 | BR 102019017195 A2 | 10-03-2020 |
| | | DE 102018213963 A1 | 20-02-2020 |
| | | DK 3613288 T3 | 03-01-2022 |
| | | EP 3613288 A1 | 26-02-2020 |
| | | RU 2019125188 A | 08-02-2021 |
| | | US 2020054027 A1 | 20-02-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102023210309
- WO 2022103611 A1
- EP 1173720 B1
- WO 2015043107 A1
- EP 3613290 A1